# EUROPEAN PATENT APPLICATION

(11) **EP 3 933 794 A1**
(43) Date of publication of application: **05.01.2022**
(21) Application number: 19916717.2
(22) Date of filing: 27.02.2019
(51) Int. Cl.: G08B 13/196, G06T 7/70, G08B 21/00, G08B 25/00, H04N 7/18

(54) **ACCURATE DIGITAL SECURITY SYSTEM, METHOD, AND PROGRAM**

(71) Applicant: Technomirai Co., Ltd, Tokyo 169-0075 (JP)
(72) Inventor: MIWA, Kazuo, Tokyo 169-0075 (JP)
(74) Representative: Appelt, Christian W.
(86) International application number: PCT/JP2019/007706
(87) International publication number: WO 2020/174634

(57) **Abstract**

Provided is an accurate digital security system, method, and program that enable establishment of high-level security by detection of a three-dimensional position at low cost and accurate detection of an intruder into a security area of three dimensions. The accurate digital security system (1000) comprises a projection storage unit (135) that stores in association respective positions in a three-dimensional space photographed by a monitoring camera (11), a human detection unit (111) that detects a human from an image photographed by the monitoring camera (11), a projection inverse transformation unit (112) that detects a position in the three-dimensional space by the projection storage unit (135) based on a position in two dimensions of the human and a size of the human detected by the human detection, and a reporting unit (115) that reports presence of a suspicious person in response to the position in the three-dimensional space of the human detected by the projection inverse transformation unit (112) being in the security area of three dimensions.

## Description

### [Technical Field]

The present invention relates to an accurate digital security system, method, and program for performing crime prevention by capturing images in a security area with a monitoring camera.

### [Background Art]

PTL 1 describes that "Having two cameras and detecting intruding objects based on three-dimensional information of the gazing area." The technology of PTL 1 detects objects that have entered the gazing area based on the changing status of three-dimensional information.

PTL 2 describes that "Setting up a three-dimensional warning area and a three-dimensional monitoring area by detecting the distance to an object based on the time difference between the light projection and the light reception." The technology of PTL 2 monitors the behavior of objects in the warning area and the monitoring area using a plurality of distance images output over time from a distance image sensor, and determines the type of objects based on the behavior of the objects.

### [Citation List]

### [Patent Literature]

[PTL 1] JP 2018-173976 A
[PTL 2] JP 2011-48594 A

### [Summary of Invention]

### [Technical Problem]

However, the alarm systems described in PTL 1 and 2 have a complicated and costly configuration for detecting the three-dimensional position.

An object of the present invention is to provide an accurate digital security system, method, and program that enable establishing advanced security while detecting three-dimensional positions at low cost.

### [Solution to Problem]

An accurate digital security system according to the present invention comprising: a photographing means configured to photograph an image of a security area of three dimensions; a projection storage means configured to store respective positions in two dimensions of the image photographed by the photographing means in association with respective positions in a three-dimensional space photographed by the photographing means; a human detection means configured to detect a human from the image photographed by the photographing means; a projection inverse transformation means configured to detect a position in the three-dimensional space by the projection storage unit based on a position in two dimensions of the human and a size of the human detected by the human detection; and a reporting means configured to report presence of a suspicious person in response to the position in the three-dimensional space of the human detected by the projection inverse transformation means being in the security area of three dimensions.

With this configuration, it is possible to detect a three-dimensional position at low cost and establish a high level of security.

The reporting means determines the presence of the suspicious person based on a time history of the position in the three-dimensional space of the detected human and reports the presence, which makes it possible to determine the three-dimensional position of an intruder by considering the time history.

The size of the human is a size of a head of the human, which makes it possible to determine the three-dimensional position of the intruder based on information independent of individual differences that do not vary much with a human's age, gender, etc. as an indicator of the size of the human.

The reporting means reports a danger degree based on the position of the suspicious person, which makes it is possible to respond to intrusion crime more rapidly according to the danger degree. Also, it is possible to transmit a message and report to a relevant organization according to the danger degree.

The reporting means reports a danger degree based on a movement of the suspicious person, which make it possible to add the movement of the suspicious person to determination condition, determine the danger degree more precisely, and establish a high level of security. For example, by determining the danger degree based on the movement of the suspicious person, it is possible to distinguish whether it is a good person or a malicious intruder, further determine the danger degree in a case of an intruder, and rank a state of warning according to the danger degree.

The system is comprised with an ID (identification) terminal detection means configured to detect an ID terminal that a non-intruder possesses; and wherein the reporting means does not report a human possessing the ID terminal detected by the ID terminal detection means, which make it possible to detect, for example, a smartphone of a family member or a relevant person, exclude from suspicious persons, reduce unnecessary reporting, and improve the effectiveness of surveillance. This also reduces the resources needed for monitoring and lowers the cost.

The system is comprised with an ID (identification) terminal registration means configured to register an ID terminal that a non-intruder possesses; and wherein the reporting means does not report a human possessing the ID terminal registered by the ID terminal registration means, which make it possible to register, for example, an ID of a visitor, exclude from suspicious persons, reduce unnecessary reporting and improve the effectiveness of surveillance. This also reduces the resources needed for monitoring and lowers the cost.

An accurate digital security method according to the present invention comprising: a photographing step of photographing an image of a security area of three dimensions; a projection storage step of storing respective positions in two dimensions of the image photographed by the photographing step in association with respective positions in a three-dimensional space photographed by the photographing step; a human detection step of detecting a human from the image photographed by the photographing step; a projection inverse transformation step of detecting a position in the three-dimensional space by the projection storage step based on a position in two dimensions of the human and a size of the human detected by the human detection; and a reporting step of reporting presence of a suspicious person in response to the position in the three-dimensional space of the human detected by the projection inverse transformation step being in the security area of three dimensions.

Further, the present invention provides a program to make a computer function as: an accurate digital security system comprising a photographing means configured to photograph an image of a security area of three dimensions; a projection storage means configured to store respective positions in two dimensions of the image photographed by the photographing means in association with respective positions in a three-dimensional space photographed by the photographing means; a human detection means configured to detect a human from the image photographed by the photographing means; a projection inverse transformation means configured to detect a position in the three-dimensional space by the projection storage unit based on a position in two dimensions of the human and a size of the human detected by the human detection; and a reporting means configured to report presence of a suspicious person in response to the position in the three-dimensional space of the human detected by the projection inverse transformation means being in the security area of three dimensions.

### [Advantageous Effects of Invention]

According to the present invention, a single camera can detect the three-dimensional position of a suspicious person at low cost and establish a high level of security.

### [Brief Description of Drawings]

[Fig. 1] Fig. 1 is a block diagram showing a configuration of an accurate digital security system according to an embodiment of the present invention.
[Fig. 2] Fig. 2 is a block diagram of a control unit of the accurate digital security system according to the embodiment of the present invention.
[Fig. 3] Fig. 3 is a configuration diagram showing an entirety of use of the accurate digital security system according to the embodiment of the present invention.
[Fig. 4] Fig. 4 is a diagram showing a security application operation of the accurate digital security system according to the embodiment of the present invention.
[Fig. 5] Fig. 5 is a flowchart showing a guard mode setting process of the accurate digital security system according to the embodiment of the present invention.
[Fig. 6] Fig. 6 is a diagram showing an example of guarding in a private house by the accurate digital security system according to the embodiment of the present invention.
[Fig. 7] Fig. 7 is a diagram showing an example of guarding in a condominium by the accurate digital security system according to the embodiment of the present invention.
[Fig. 8A] Fig. 8A is a flowchart showing an accurate digital security process of the accurate digital security system according to the embodiment of the present invention.
[Fig. 8B] Fig. 8B is a flowchart showing the accurate digital security process of the accurate digital security system according to the embodiment of the present invention.
[Fig. 9] Fig. 9 is a flowchart showing a three-dimensional position detection process by a projection inverse transformation unit of the accurate digital security system according to the embodiment of the present invention.
[Fig. 10] Fig. 10 is a diagram showing an example of intruder detection in a plane by the accurate digital security system according to the embodiment of the present invention.
[Fig. 11] Fig. 11 is a diagram showing an example of intruder detection in an elevation by the accurate digital security system according to the embodiment of the present invention.
[Fig. 12] Fig. 12 is a diagram showing an example of intruder verification according to time by the accurate digital security system according to the embodiment of the present invention.
[Fig. 13] Fig. 13 is a diagram showing an example mapping of a site boundary onto a camera image by the accurate digital security system according to the embodiment of the present invention.
[Fig. 14] Fig. 14 is a diagram for describing an example of registering of heights of objects that are present in advance within a site by the accurate digital security system according to the embodiment of the present invention.
[Fig. 15] Fig. 15 is a diagram for describing changes in height according to states of a human in the accurate digital security system according to the embodiment of the present invention.
[Fig. 16] Fig. 16 is a diagram for describing changes in height according to states of a human in the accurate digital security system according to the embodiment of the present invention.
[Fig. 17] Fig. 17 is a diagram for describing judgment by changes in movements of the pupils and the neck in the accurate digital security system according to the embodiment of the present invention.
[Fig. 18] Fig. 18 is a diagram for describing temporary guard cancellation by BLE of the accurate digital security system according to the embodiment of the present invention.
[Fig. 19] Fig. 19 is a diagram for describing Application Example 1 of intrusion detection by the accurate digital security system according to the embodiment of the present invention.
[Fig. 20] Fig. 20 is a flowchart showing an outline of an operation and actions of the accurate digital security system, a family member, and a suspicious person in Application Example 1 of Fig. 19.
[Fig. 21] Fig. 21 is a diagram for describing Application Example 2 of intrusion detection by the accurate digital security system according to the embodiment of the present invention.
[Fig. 22] Fig. 22 is a flowchart showing an operation of the accurate digital security system in Application Example 2 of Fig. 21.
[Fig. 23] Fig. 23 is a diagram for describing Application Example 3 of intrusion detection by the accurate digital security system according to the embodiment of the present invention.
[Fig. 24] Fig. 24 is a flowchart showing an operation of the accurate digital security system in Application Example 3 of Fig. 23.
[Fig. 25] Fig. 25 is a flowchart showing a process of notifying to a user according to caution degree in Application Example 4 of the accurate digital security system according to the embodiment of the present invention.

### [Description of Embodiments]

Hereinafter, embodiments to carry out the present invention are described in detail with reference to the accompanying drawings.

### (Embodiment)

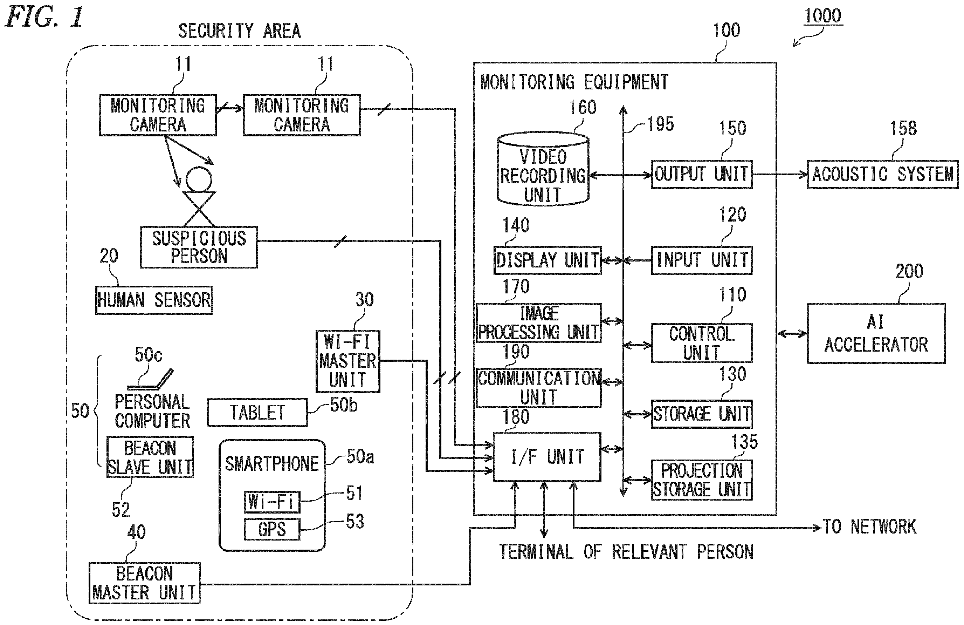

Fig. 1 is a block diagram showing a configuration of an accurate digital security system according to an embodiment of the present invention.

The present accurate digital security system is favorable for application in residences, offices of enterprises, factories, research laboratories, information processing rooms, monetary accounting rooms, and other places of business, etc., requiring high-level control.

As shown in Fig. 1, the accurate digital security system 1000 comprises one monitoring cameras 11 (photographing means) installed in each security area, a human sensor 20, a Wi-Fi (wireless fidelity) terminal (hereinafter referred to as "Wi-Fi master unit") 30 that is installed in the security area, a beacon master unit 40, mobile terminal devices 50 (ID (identification) terminals) that are carried by relevant persons (family members), a monitoring equipment 100 that controls the whole system, and an AI (artificial intelligence) accelerator 200 (human detection means). The security area is a warning area (guarded area) and, for example, includes a site, an entrance front, or a balcony in a case of a residence or includes an elevator hall, a balcony, a window, etc., in a case of an office.

Although here, the monitoring equipment 100 is installed in the security area, it may instead be installed externally via an network not shown in the figure. If the monitoring equipment 100 is installed in a server on a network, a plurality of security areas can be monitored.

### <Monitoring camera 11>

Each monitoring camera 11 photographs an image (two-dimensional) of the security area that is specified three-dimensionally.

All or part of the monitoring cameras 11 are PTZ (pan-tilt-zoom) cameras having a PTZ function and are remotely operated by the monitoring equipment 100. The monitoring camera 11 is installed at an outer wall perimeter to be guarded of a security-applied building, for example, respective locations of entrances/exits, window openings, outer perimeter of a site boundary, and applicable site areas from which an intruder can enter and exit. Images photographed by the monitoring camera 11 is output to the monitoring equipment 100 and recorded in a video recording unit 160.

### <Human sensor 20>

The human sensor 20 is a thermal camera or infrared camera, etc., and detects a suspicious person in the security area by detecting a temperature of a sensed object in the security area.

### <Wi-Fi master unit 30>

The Wi-Fi master unit 30 uses Wi-Fi to exchange information with Wi-Fi slave unit 51 of the mobile terminal device 50. Also, the Wi-Fi master unit 30 can acquire position information by Wi-Fi positioning, that is, acquisition of position information using a Wi-Fi access point and a predetermined position information service.

### <Beacon master unit 40>

BLE (Bluetooth Low Energy) is a wireless technology that detects proximity. BLE is configured by a combination of the beacon master unit 40 that is a transmitting side beacon device and an application (corresponding to a beacon slave unit 52 described later) of the mobile terminal devices 50 that supports reception of radio waves from the beacon master unit 40. BLE transmits unique ID information necessary for identification and responds only to the application associated with the ID information of the mobile terminal device 50. The application of the mobile terminal device 50 is registered with the same identifier as that of the beacon master unit 40. By execution of an application equipped with a BLE function, the application (beacon slave unit 52) of the mobile terminal device 50 stands by in the background and induces a predetermined action on becoming in proximity to a beacon of the beacon master unit 40.

### [Mobile terminal device 50]

The mobile terminal device 50 is carried by each family member, etc. The mobile terminal device 50 may be, for example, a smartphone 50a, a tablet 50b, or a notebook computer 50c, etc. In addition, the mobile terminal device 50 may be a cellphone, a PHS (personal handy-phone system), a PDA (personal digital assistant), or a dedicated terminal, etc. In the present embodiment, the mobile terminal devices 50 can be used at various locations (that is, current positions) by family members, etc., and can receive an e-mail or an image including a video, etc., from the monitoring equipment 100 via a telephone line not shown in the figure.

In the present embodiment, the mobile terminal device 50 is assumed to be a smartphone 50a (ID terminal), which can be used by each individual at various locations (that is, current positions). One of the mobile terminal devices 50 is disposed at a security company not shown in the figure.

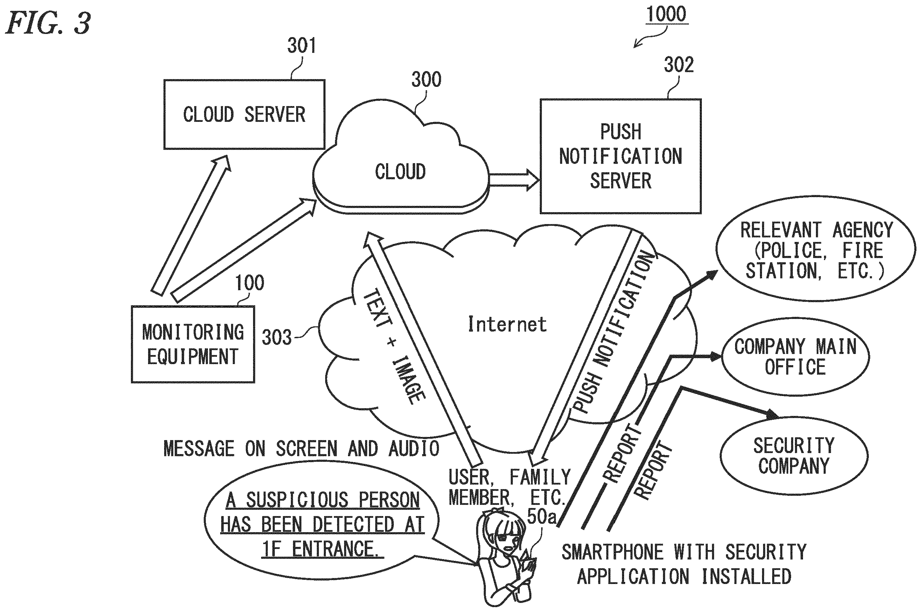

The smartphone 50a has an accurate digital security application (hereinafter referred to as the "security application"). When started as a background process of each application, the security application can connect via, for example, a communication carrier network (fixed network), a web service cloud 300 (see Fig. 3 described later), or the internet 303 (see Fig. 3 described later) to a cloud server 301 (see Fig. 3 described later) on the web service cloud 300 and receive a message concerning a suspicious person from the cloud server 301. The smartphone 50a can display a message on a standby screen, etc., notifying that a suspicious person has been detected.

The smartphone 50a comprises a Wi-Fi individual identification device (hereinafter referred to as the "Wi-Fi slave unit") 51 and a GPS 53 that captures a position of a relevant person.

Furthermore, the smartphone 50a may comprise a beacon slave unit 52. Or, the smartphone 50a may comprise any one among a Wi-Fi slave unit 51, a beacon slave unit 52, and a GPS 53.

### <Wi-Fi slave unit 51>

The Wi-Fi slave unit 51 receives and performs individual identification of radio waves from the Wi-Fi master unit 30 installed in a business facility. The monitoring equipment 100 stores placement information on the Wi-Fi master unit 30 installed within the facility as safety-related information. When the Wi-Fi slave unit 51 is brought close to the Wi-Fi master unit 30, the ID and position of the relevant person carrying the mobile terminal device 50 can be determined.

### <Beacon slave unit 52>

The beacon slave unit 52 is an application of the mobile terminal devices 50 that supports reception of radio waves from the beacon master unit 40. The beacon master unit 40 transmits a beacon (unique ID information necessary for identification) and the application (beacon slave unit 52) of each mobile terminal device 50 induces a predetermined action on becoming in proximity to the beacon of the beacon master unit 40.

### <GPS 53>

The GPS 53 receives radio waves of position information from GPS satellites, etc. From the information received via a GPS antenna, the GPS 53 calculates current position information as the three parameters of latitude, longitude, and elevation to acquire the position information. The acquired position information is sent at an appropriate timing to the monitoring equipment 100.

Here, although as a means for acquiring the position information, an example of using the GPS satellites is illustrated with the present embodiment, it may instead be a system, other than GPS, that uses a positional relationship with a base station. For example, if an Android (registered trademark) smartphone or a highly functional mobile phone with a camera is used as a mobile terminal device 50 that is a mobile terminal, in place of or in combination with the GPS 53, it is also possible to send and receive information to and from a mobile phone company server via a base station and a mobile phone communication network (not shown) to acquire current position information of the terminal itself from proximity confirmation.

Position information acquisition by Wi-Fi positioning, that is, position information acquisition using a Wi-Fi access point and a predetermined position information service, may also be used.

### [Monitoring equipment 100]

The monitoring equipment 100 is installed in a residence of a relevant person (for example, a family member) and centrally controls the security area. The monitoring equipment 100 may be a common server computer or a personal computer, etc.

The monitoring equipment 100 comprises a control unit 110, an input unit 120, a storage unit 130, a projection storage unit 135 (projection storage means), a display unit 140, an output unit 150, the video recording unit 160 (recording means), a face information DB (database) 165, an image processing unit 170, an interface (I/F) unit 180, and a communication unit 190, and the respective units are connected by a bus 195.

In the following, when the subject is described as "the XX unit," the control unit 110 reads out respective programs from a ROM as needed and then loads the same in a RAM, and executes respective functions (described later). The respective programs may be stored in advance in the storage unit 130, or may be taken into the monitoring equipment 100 when necessary via another storage medium or communication medium.

The control unit 110 consists of a CPU (central processing unit), etc., and controls an entirety of the monitoring equipment 100 and make it function as an accurate digital security system by executing a control program. A detailed configuration of the control unit 110 shall be described later.

The input unit 120 is an input device for a user of the monitoring equipment 100 to input instructions, etc., such as a keyboard, mouse, touch panel on a screen of the display unit 140, microphone, etc.

The storage unit 130 is constituted of memories such as a ROM (read only memory), RAM (random access memory), EEPROM (electrically erasable programmable read-only memory), etc., and stores various data and programs, etc. , used by the control unit 110. The storage unit 130 stores still images or moving images received from the monitoring camera 11 and stores the various data and programs, etc., used by the control unit 110.

The projection storage unit 135 stores each two-dimensional position in an image photographed by the monitoring camera 11 in association with each position in a three-dimensional space photographed by the monitoring camera 11. The projection storage unit 135 stores a shape by a projection transformation that projects the shape defined in the three-dimensional space onto a two-dimensional plane.

Furthermore, the projection storage unit 135 may use a portion of a memory region of the storage unit 130.

The display unit 140 displays operation status of the monitoring equipment 100, images received from the monitoring camera 11 or a GUI (graphical user interface) for operation of the monitoring equipment 100, etc.

The output unit 150 is, for example, an audio interface and outputs an audio signal from the monitoring equipment 100 to an acoustic system 158 in the security area. The audio signal output from the monitoring equipment 100 to the acoustic system 158 may, for example, be an audio signal input from a microphone or other audio input device provided at the input unit 120 or an audio signal that the control unit 110 plays music data stored in the storage unit 130. The acoustic system 158 comprises an amplifier and a plurality of speakers disposed in the site, and announces the signal input from the monitoring equipment 100 into the site.

The video recording unit 160 consists of an external storage device, such as an HDD (hard disk drive), and records images in the security area photographed by the monitoring camera 11. The video recording unit 160 records at high image quality for a predetermined short time after photography, and after that predetermined short time, converts to a low image quality and records for a predetermined long time.

The face information DB 165 accumulates face images (face information) of suspicious persons and store relevant persons, etc. The face information DB 165 is constructed by obtaining basic data such as faces of humans, etc., registered in the face information DB 165 from a headquarters, main office or security company, etc., not shown in the figure, via the I/F unit 180. The mutual face information DB can be updated with the latest face images (face information) by exchanging information with the headquarters, main office or security company, etc., not shown in the figure.

The image processing unit 170 consists of a DSP (digital signal processor), etc., and performs predetermined processes on received images. The predetermined processes include contour extraction, image resizing or resolution conversion process, etc.

A size of the moving object can be determined by inputting outer shape lines of the object, for example, with movement in a 1/5 second image, a 2/5 second image, a 3/5 second image, a 4/5 second image, and a 5/5 second image if the images photographed by the monitoring camera 11 are images of 5 frames per second, and with movement in 10 images if the images are of 10 frames per second.

The image processing unit 170 processes image data photographed by the monitoring camera 11 and outputs images in the security area.

The I/F unit 180 connects the respective monitoring cameras 11 disposed in the security areas and the monitoring equipment 100. Also, the I/F unit 180 connects to the headquarters, main office or security company, etc. , not shown in the figure, by a network or a dedicated line.

The communication unit 190 sends and receives data to and from the mobile terminal devices 50 via a base station. The communication unit 190 has a wireless communication function and is connected to a control board using, for example, a UART (universal asynchronous receiver transmitter).

### [Control unit 110]

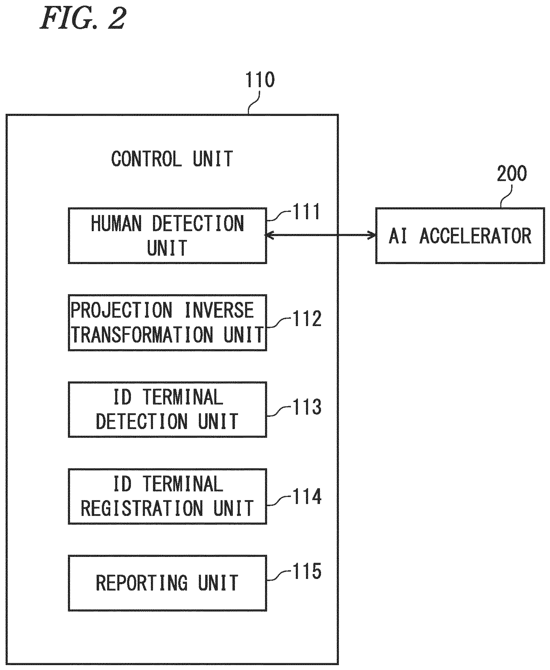

Fig. 2 is a block diagram of the control unit 110 of the accurate digital security system according to the embodiment of the present invention.

As shown in Fig. 2, the control unit 110 consists of the CPU (central processing unit), etc. , and controls the entirety of the monitoring equipment 100 and makes it function as the accurate digital security system by executing the control program.

The control unit 110 comprises a human detection unit 111 (human detection means), a projection inverse transformation unit 112 (projection inverse transformation means), an ID terminal detection unit 113 (ID terminal detection means), an ID terminal registration unit 114 (ID terminal registration means), and a reporting unit 115 (reporting means).

The control unit 110 determines that a suspicious person has intruded into a specific area (in a security area) in three-dimensions, in response to inverse transformation of the projection transformation by the projection inverse transformation unit 112.

The control unit 110 determines a size of the human by a size of a head of the human, etc.

The control unit 110 determines a danger degree based on a position of the suspicious person.

The control unit 110 determines the danger degree based on a movement of the suspicious person.

The controller 110 excludes a human possessing an ID terminal detected by the ID terminal detection unit 113 from suspicious persons.

The controller 110 excludes a human possessing the ID terminal registered by the ID terminal registration unit 114 from suspicious persons.

The human detection unit 111 detects a human from an image photographed by the monitoring camera 11 and detects the size of the human. Specifically, the human detection unit 111 uses an AI accelerator 200 (described later) to detect a human in the security area. The human detection unit 111 issues a human detection request to the AI accelerator 200, and the AI accelerator 200 executes an AI calculation by a means other than the CPU and sends a human detection result to the human detection unit 111. The AI accelerator 200 is used for human detection because high speed is required for human detection.

The accurate digital security system 1000 detects an intruder into the security area by human detection using the AI accelerator 200.

In deep learning by the AI accelerator 200 especially by making only humans as the target of monitoring, the accurate digital security system 1000 can detect an intruder with extremely high precision in comparison to conventional image recognition by a moving obj ect detection type monitoring camera using conventional image subtraction.

Although in the present embodiment, the human detection unit 111 uses the AI accelerator 200 to detect a human, it may detect a human by a thermal camera (human sensor 20) . That is, the human sensor 20 detects temperature in the security area. Then the human detection unit 111 detects the presence of the human (suspicious person candidate) when the human sensor 20 detects the body temperature of the human and the monitoring camera 11 detects a change in its photographed image.

The human detection unit 111 may combine the human detection using the AI accelerator 200 with the human detection using a thermal camera (or a human sensor) . For example, the AI accelerator 200 is used for an entrance front, a balcony, or a window where high speed is required for human detection in the security area, and the thermal camera (or the human sensor) is used for the site at the boundary between the site and the exterior where high speed is not required for human detection.

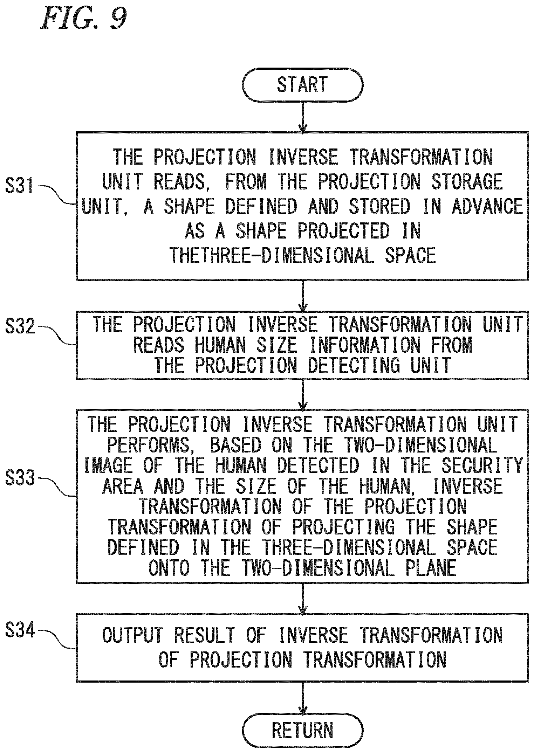

The projection inverse transformation unit 112 detects a position in the three-dimensional space by the projection storage unit 135 based on a position in two dimensions of the human and a size of the human detected by the human detection (in particular, a size of a head of the human). Specifically, the projection inverse transformation unit 112 detects a three-dimensional position by an inverse transformation of projection transformation from an image of one monitoring camera 11 (to be described in detail with Fig. 9) .

The ID terminal detection unit 113 detects an ID (identification) terminal possessed by a non-intruder.

The ID terminal registration unit 114 registers an ID terminal possessed by a visitor, etc.

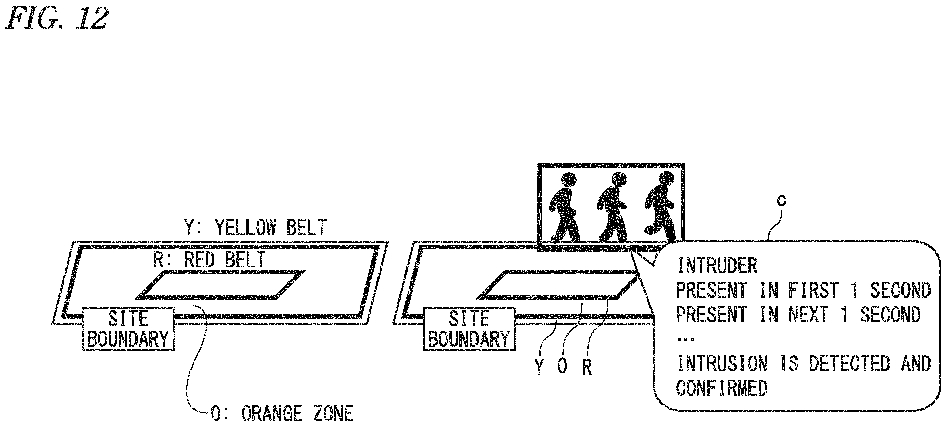

The reporting unit 115 reports the presence of a suspicious person in response to the position of the human in the three-dimensional space detected by the projection inverse transformation unit 112 being within the security area of three dimensions. Further, the reporting unit 115 preferably determines the presence of the suspicious person based on a time history of the position in the three-dimensional space of the detected human and reports the presence (to be described in detail with Fig. 12).

### [AI accelerator 200]

The AI accelerator 200 is a dedicated processor that detects a human and uses a calculation resource other than the CPU. The AI accelerator 200 is an accelerator, for example, for image processing by a processor with an enhanced GPU (graphics processing unit) and signal processing using FPGA (field programmable gate array) . Also, the AI accelerator 200 executes AI (artificial intelligence) calculation on a dedicated hardware (for example, a GPU).

It takes approximately 1.5 seconds to process detection of a human (a human body) per single digital image, with computer processing by an ordinary PC. Therefore, with the present embodiment, the AI accelerator 200, that is a human detection processor, is used to obtain performance of approximately 10 times that of the computer processing by the ordinary PC to rapidly execute intrusion detection. Also, with the present embodiment, AI calculation that is high in calculation load is entrusted to the AI accelerator 200 that is a dedicated hardware. It was possible to verify that thereby, suspicious behavior can be detected in real time and a suspicious person can be registered even with a configuration using a commercially available camera and inexpensive devices.

### [Accurate digital security system]

Fig. 3 is a configuration diagram showing an entirety of use of the accurate digital security system according to the embodiment of the present invention.

As shown in Fig. 3, the accurate digital security system 1000 includes, on the web service cloud 300, the cloud server (commercial server) 301 that provides an accurate digital security service and a push notification server 302 that cooperates with the cloud server 301 to actively acquire information and notify the smartphone 50a (mobile terminal devices; ID terminals) of a user. The web service cloud 300 is connected to the internet 303. The smartphone 50a can send text and images to the cloud server 301 on the web service cloud 300 via the internet 303. Also, the smartphone 50a receives push notifications from the push notification server 302 via the internet 303. Further, the cloud server 301 and the push notification server 302 are connected via an LTE/3G network or other communication carrier network (fixed network) (not shown) to the smartphone 50a in which the security application is installed.

As shown in Fig. 3, the accurate digital security system 1000 detects intrusion of a suspicious person into a site and performs push notification to the smartphone 50a possessed by the user or a family member, etc.

When the user taps the notification that arrived at the smartphone 50a, the security application is started and displays a zoom screen of the suspicious person and a message stating that: "A suspicious person has been detected at the 1F entrance." is scrolled. At the same time, the contents are read out in audio. Notification of the suspicious person is thus performed by the message on the screen of the smartphone 50a and by audio. Further, by operation by the user of the smartphone 50a, a relevant agency (police/fire department) is notified, for example, in case of emergency. In this case, the security company or a relevant company main office is also notified automatically. Or, if there is no urgency or confirmation is desired, just the security company is notified.

### [Security application operation]

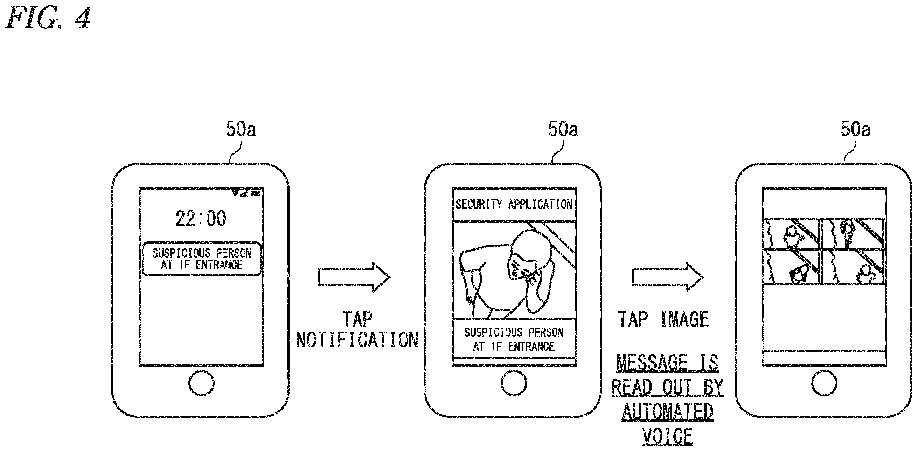

Fig. 4 is a diagram showing a security application operation of the accurate digital security system according to the embodiment of the present invention.

As shown in Fig. 4 left, the message indicating that a suspicious person has been detected is notified on the standby screen, etc., of the smartphone 50a. As shown in Fig. 4 middle, by the user's tap, the display on the smartphone 50a switches to a security application operation display, displays the zoom screen of the suspicious person, and displays the position of the suspicious person and the condition: "Suspicious person at 1F entrance." Also, this message is read out by an automated voice. Further, by the user's tap, the display on the smartphone 50a is switched to a display of four screens as shown in Fig. 4 right.

The operation of the accurate digital security system configured as described above shall now be described.

### [Accurate digital security process]

First, a guard mode setting of the accurate digital security system shall be described.

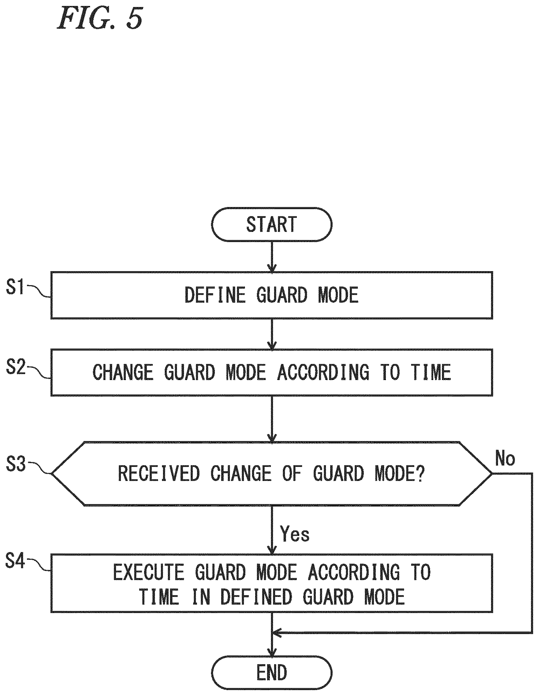

Fig. 5 is a flowchart showing a guard mode setting process of the monitoring equipment 100 of the accurate digital security system. This flow is executed by the control unit 110 (see FIG. 2) of the monitoring equipment 100.

In Step S1, a guard mode is defined.

In Step S2, the guard mode is changed according to time.

In Step S3, it is determined whether or not a change of the guard mode has been received from the smartphone 50a (mobile terminal device 50).

If a change of the guard mode has been received from the smartphone 50a (mobile terminal device 50) (Step S3: Yes), guarding according to the instructed guard mode is executed in Step S4.

If a change of the guard mode has not been received (Step S3: No), the present flow is ended and guard mode according to time is executed in the defined guard mode.

By defining the above guard mode, unnecessary processing can be eliminated and consequently, low cost and speedup of processing can be achieved through reduction of calculation resources.

### [Guard example by the accurate digital security system]

A guard example by the accurate digital security system shall now be described.

### <Home and building>

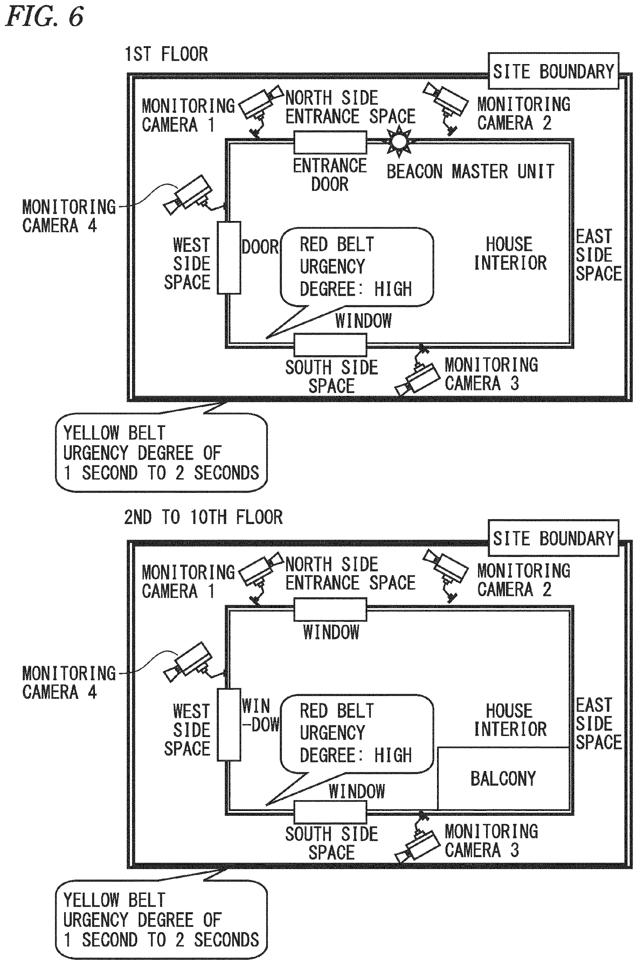

Fig. 6 is a diagram showing a guard example in a private house.

The accurate digital security system provides a crime prevention system in private houses for individuals, and in offices, stores, financial institutions, etc. The main functions are as follows.

The guard mode (in-room guarding, out-of-home guarding, etc.) is defined and a crime prevention function is provided according to the guard mode.

A function of changing the guard mode according to time is equipped.

An intruder is detected/registered from a video of the monitoring camera 11 installed at an outer perimeter of a house.

A danger degree (caution degree, urgency degree) of the detected intruder is determined and the user is notified according to the danger degree (caution degree, urgency degree).

BLE is used to change the guard mode by the smartphone 50a from outdoors.

A warning is notified to the intruder through the smartphone 50a or a speaker of the monitoring camera, etc.

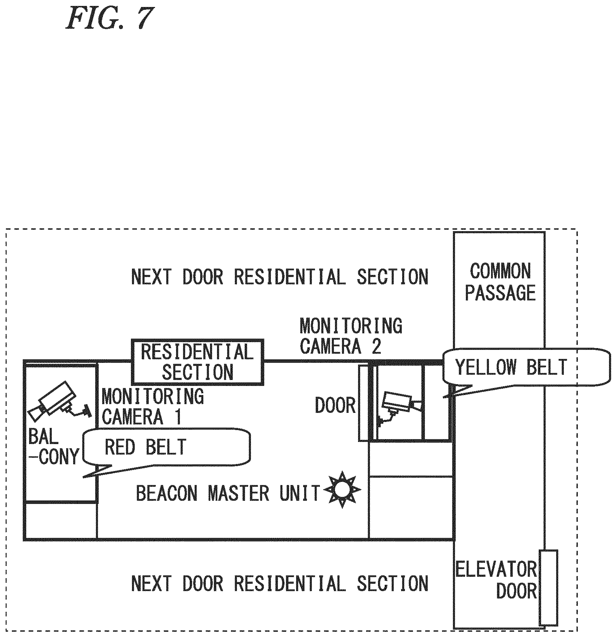

Fig. 7 is a diagram showing an example of guarding in a condominium.

For example, a crime prevention system for a condominium is provided. The main functions are as follows.

The guard mode is defined and a crime prevention function is provided according to the guard mode.

A function of changing the guard mode according to time is equipped.

An intruder is detected/registered from a video of the monitoring camera 11 installed at an outer perimeter of a residential section.

A danger degree (caution degree, urgency degree) of the detected intruder is determined and the user is notified according to the danger degree (caution degree, urgency degree).

BLE is used to change the guard mode by the smartphone 50a from outdoors.

A warning is notified to the intruder through the smartphone 50a or a speaker of the monitoring camera, etc.

### [Accurate digital security process]

Next, the accurate digital security process of the accurate digital security system shall be described.

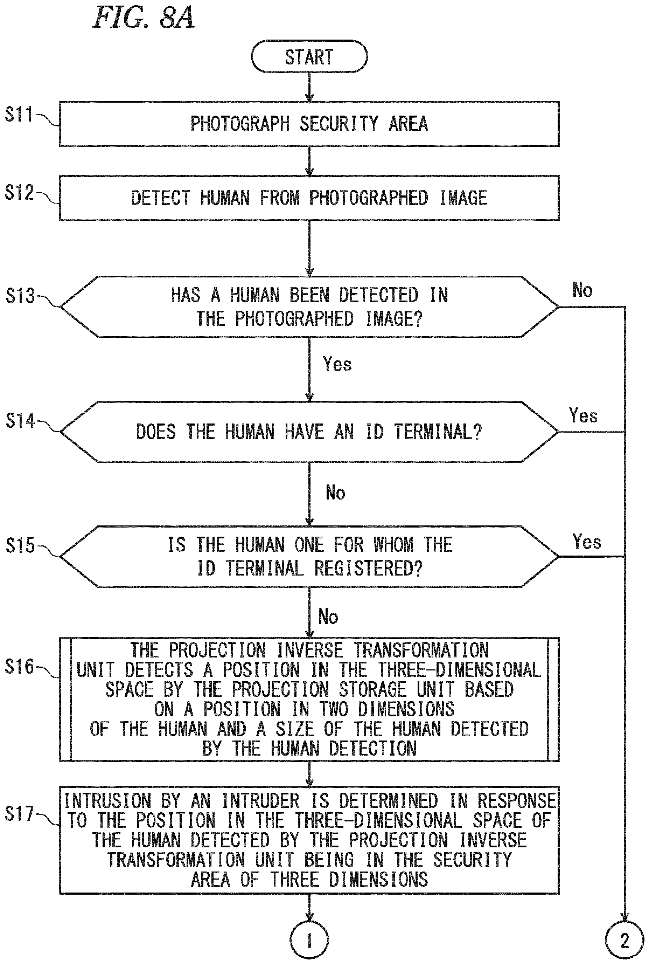

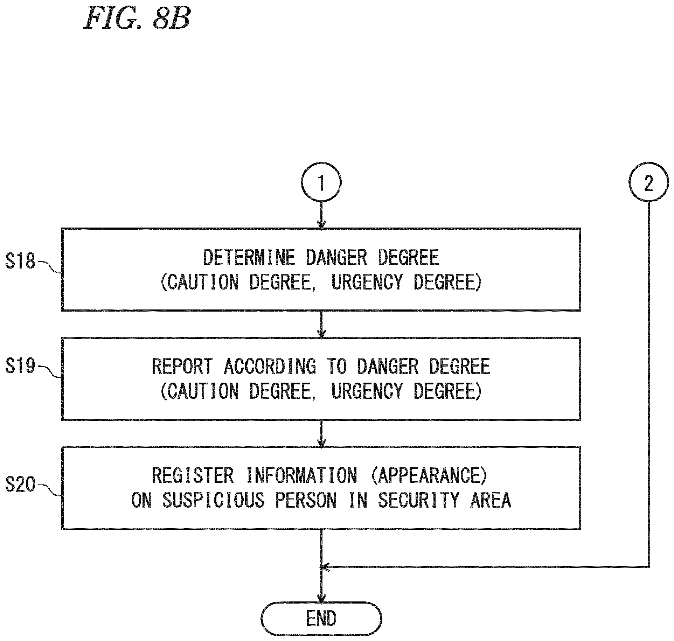

Fig. 8A and Fig. 8B are flowcharts showing an accurate digital security process of the accurate digital security system. This flow is executed in the "guard mode" set in Fig. 5 by the control unit 110 (see Fig. 2) of the monitoring equipment 100.

In Step S11, an image of the security area (specific area) specified in three dimensions is photographed. The monitoring camera 11 is, for example, a PTZ camera and is remotely operated by the monitoring equipment 100. The image photographed by the monitoring camera 11 is output to the monitoring equipment 100.

In Step S12, the human detection unit 111 of the control unit 110 detects a human from the image photographed by the monitoring camera 11. In the present embodiment, the human detection unit 111 requests a "human detection process" by AI to the AI accelerator 200 and the human detection unit 111 waits for a human detection result from the AI accelerator 200. Furthermore, the human detection unit 111 may also use human detection by a thermal camera (or the human sensor 20) in combination.

In Step S13, the control unit 110 determines whether or not a human has been detected in the image photographed by the monitoring camera 11.

If a human has been detected in the image photographed by the monitoring camera 11 (Step S13: Yes), Step S14 is proceeded. If a human has not been detected in the image photographed by the monitoring camera 11 (Step S13: No), the present flow is ended.

In Step S14, the control unit 110 determines whether or not the human is one who possess an ID terminal (mobile terminal device 50; smartphone 50a) detected by the ID terminal detection unit 113 (a family member or other human possessing a predetermined ID, etc.). The control unit 110 excludes a human possessing an ID terminal detected by the ID terminal detection unit 113 from suspicious persons (Step S14: Yes) and proceeds to Step S15.

In Step S15, the control unit 110 determines whether or not the human is one who possesses an ID terminal (ID of a visitor, etc.) registered by the ID terminal registration unit 114. The control unit 110 excludes a human possessing a registered ID terminal (ID of a visitor, etc.) from suspicious persons (Step S15: Yes) and proceeds to Step S16.

Thus, if a family member, etc., possesses an ID terminal or an ID terminal of a visitor, etc., is registered in advance, processes of subsequent steps are skipped to accelerate processing.

In Step S16, the projection inverse transformation unit 112 of the control unit 110 uses the projection storage unit 135 to detect a position in the three-dimensional space by the projection storage unit 135 based on a position in two dimensions of the human and a size of the human detected by the human detection. The size of the human may be a body height, etc., but is preferably a size of a head of the human. The size of the head of the human that does not change much with age or gender, etc., of a human can be used as an index of the size of the human.

In Step S17, in response to the position in the three-dimensional space of the human detected by the projection inverse transformation unit 112 being in the security area of three dimensions, the control unit 110 determines intrusion by a suspicious person. For example, a case of intrusion by going over a wall from a roof of a garage next door, etc., can be detected.

If a suspicious person has intruded into the security area, the control unit 110 determines the danger degree of intrusion based on a position of the suspicious person and/or a movement of the suspicious person in Step S18. If there is no intrusion into the security area by a suspicious person, the process of this flow is ended.

(1) The danger degree (caution degree, urgency degree) is determined from the position of the suspicious person. For example, as shown in Fig 6 and Fig. 7 described above, the danger degree can be determined to be medium if a human is detected in a yellow belt (described later) or to be high if a human is detected in a red belt (described later) . Also, the danger degree can be determined to be low if a human is detected outside the yellow belt. On the other hand, in a case where the intruder (suspicious person) intrudes by going over the wall from the roof of the garage next door, etc. from the position of the suspicious person in three dimensions, the danger degree (urgency degree) can be determined to be extremely high.

(2) The danger degree (caution degree, urgency degree) can also be determined from the movement of the suspicious person. Examples of the movement of the suspicious person are a movement of the pupils and a movement of the neck (to be described in detail later). If the movement of the suspicious person is unnatural, it can be determined that the danger degree (caution degree, urgency degree) is high.

In Step S19, the reporting unit 115 reports according to the danger degree (caution degree, urgency degree) . As a report, for example, information concerning the suspicious person is sent to the smartphone 50a of a relevant person. The report should be accompanied by a message, mark, highlighted text, or color coding that indicates the danger degree, corresponding to the danger degree of the intrusion crime (classification of the danger degree). Also, a report destination is changed in correspondence with the danger degree or urgency degree. For example, in the case where the intruder (suspicious person) intrudes by going over the wall from the roof of the garage next door, etc., it is determined that the intruder is dangerous and the urgency degree is high and a message of the highest urgency degree concerning the intruder is notified. Further, the police, etc., is included among the relevant agencies that are the report destinations. Also, this reporting is performed with higher priority than an automatic registration process, etc., of the suspicious person. Also, if a human is detected in the red belt, a message of high urgency degree of intrusion is notified, and if a human is detected outside the yellow belt, a message of urgency degree of intrusion that is medium is notified (see Fig. 4).

As mentioned above, the message reporting the presence of the suspicious person is sent to the standby screen, etc., of the smartphone 50a shown in Fig. 4 left. By the user's tap, the zoom screen of the suspicious person is displayed and the position of the suspicious person and the condition: "Suspicious person at 1F entrance." are displayed as shown in Fig. 4 middle, and this message is read out by the automated voice.

In Step S20, the control unit 110 registers information on the suspicious person in the security area in the storage unit 130 and ends the process of the present flow. Intrusion information on the suspicious person is thereby recorded and becomes information useful for crime prevention.

If a human is not detected from the image photographed by the monitoring camera 11 in Step S13 described above, or if the human is one who possesses an ID terminal of a family member, etc. in step 14 described above, or if the human is one for whom an ID terminal for a visitor, etc. is registered in Step S15 described above, the present flow is ended.

### [Three-dimensional position detection by the projection inverse transformation unit 112]

Next, three-dimensional position detection by the projection inverse transformation unit 112 shall be described.

Fig. 9 is a flowchart showing a three-dimensional position detection process by the projection inverse transformation unit 112 of the accurate digital security system. The flow of Fig. 9 is a subroutine of Step S16 of Fig. 8A.

Upon being started by the subroutine call of Step S16, in Step S31, the projection inverse transformation unit 112 reads, from the projection storage unit 135, a shape defined and stored in advance as a shape projected in the three-dimensional space.

In Step S32, the projection inverse transformation unit 112 reads human size information from the projection storage unit 135.

In Step S33, the projection inverse transformation unit 112 performs inverse transformation of "the projection transformation of projecting the shape defined in the three-dimensional space onto the two-dimensional plane" based on the two-dimensional image of the human and the size of the human detected in the security area. The projection inverse transformation unit 112 detects a three-dimensional position by performing the inverse transformation of the projection transformation from the image of one monitoring camera 11. Although in principle, it should not be possible to detect a position in three dimensions from a two-dimensional image, if it is deemed that the size of the human is known (on the premise that the size of the head hardly differs according to human), the three-dimensional position can be detected based on a two-dimensional image photographed by one monitoring camera 11 and the detected human size information. That is, if the transformation of projecting a shape defined in the three-dimensional space onto the two-dimensional plane is to be called the "projection transformation," the projection inverse transformation unit 112 can detect the three-dimensional position by adding the human size information to the detected human information to perform the inverse transformation ("projection inverse transformation) of the projection transformation from the camera image.

In Step S34, the projection inverse transformation unit 112 outputs a result of the inverse transformation of the projection transformation and returns to Step S16 of Fig. 8.

### [Features of accurate digital security]

Next, the features of accurate digital security of the accurate digital security system shall be described.

The accurate digital security system 1000 uses one or more combinations of arts for an into-site intrusion detection/registration function, including arts for determining intrusion planarly, arts for determining intrusion in elevation, and arts for verifying intrusion detected planarly and in elevation according to time. This shall now be described in detail.

To detect a suspicious person, the first step is to determine from a camera image whether or not a human has intruded into a site. After this determination, it is verified whether or not the human is a suspicious person, and registered and notified.

A warning area is inspected two-dimensionally, three-dimensionally, and four-dimensionally (in three dimensions + time) and a danger degree is evaluated and registered.

An area within a site boundary is classified into three parts according to the danger degree.
- Security yellow belt: For example, a zone of 30 cm inside the site boundary (to approximately 3 m or 4 m).
- Security orange zone: Between the yellow belt and a security red belt.
- Security red belt: For example, an area within 30 cm horizontally from a wall of a house (to approximately 3 m or 4 m) .

### <Regarding the security belts>

The security yellow belt (hereinafter indicated by Y in the figures) is a state of an early warning level. Intrusion into this area is notified by the danger degree yellow and it is possible to detect accurately and counteract early by adding additional three-dimensional and four-dimensional information for verification and notifying if there is intrusion as a result of verification. Also, the security red belt (hereinafter indicated by R in the figures) is a level that requires an immediate notification if there is intrusion into the region.

### <Detection in a plane>

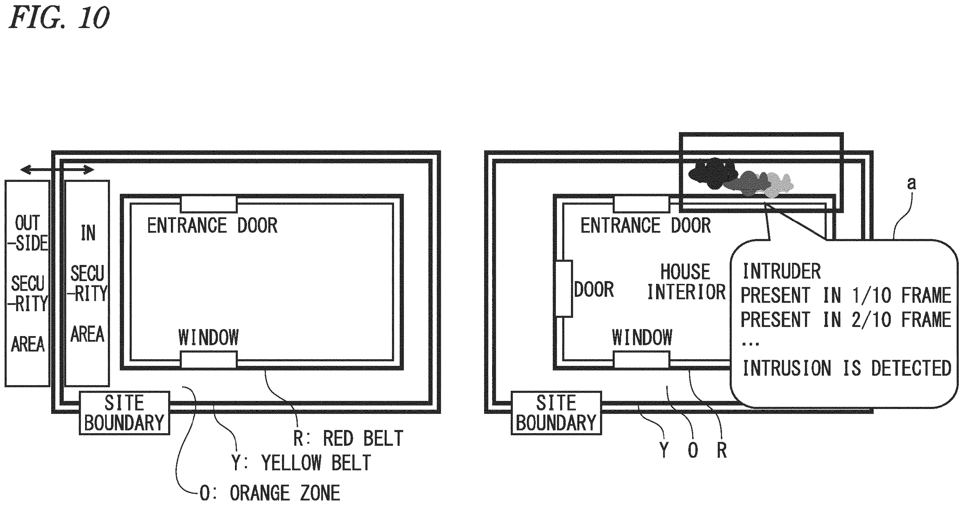

Fig. 10 is a diagram showing an example of intruder detection in a plane and Fig. 10 left shows a normal state in the plane and Fig. 10 right shows an abnormal state in the plane.

As shown in Fig. 10 left, the security yellow belt is set within a site boundary and the security red belt is set across a security zone, surrounding a wall of a house with an entrance door and a window.

An abnormal state in the plane is shown in Fig. 10 right. An intruder has intruded beyond the security yellow belt to an outer side of the security red belt.

In intrusion detection in a plane, an inclusion relationship between the intruder and the boundary is evaluated. For example, as shown by symbol a of Fig. 10 right, if the monitoring camera 11 photographs at 10 frames/second, a moving object that has intruded is detected from images of 10 frames (see frame in Fig. 10 right) and its planar position is calculated. If the intruder is unquestionably detected in the 10 frames (in 5 frames with a monitoring camera of 5 frames/second), it is judged that there is possibility of presence of an intruder.

### <Detection in an elevation>

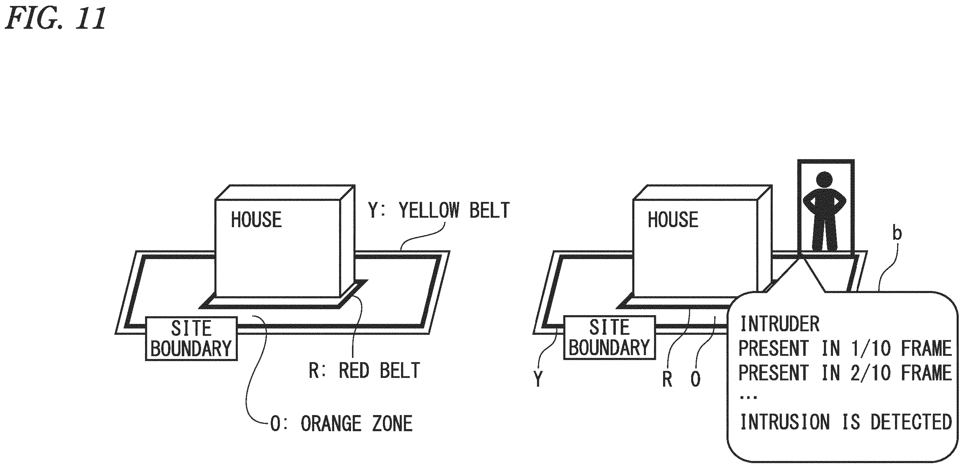

Fig. 11 is a diagram showing an example of intruder detection in an elevation and Fig. 11 left shows a normal state in the elevation and Fig. 11 right shows an abnormal state in the elevation.

As shown in Fig. 11 left, the security yellow belt is set inside a site boundary and the security red belt is set across a security zone, surrounding a wall of a house.

In detection in an elevation, a height (see frame in Fig. 11 right) is evaluated from an image of the monitoring camera 11. It is evaluated whether or not this height is a height of a typical human. For example, as shown by symbol b of Fig. 11 right, the number of images in 1 second of the monitoring camera 11 is evaluated. It is then judged that the intruder is unquestionably a human.

Here, in evaluating the height from the image of the monitoring camera 11, the projection inverse transformation unit 112 uses the projection storage unit 135 to detect, for the human detected by the human detection, the position in three-dimensional space based on the position in two dimensions of the human and the size of the human in Step S16 of Fig. 8 described above. Then in Step S17 of Fig. 8, the control unit 110 accommodates the process of judging intrusion by a suspicious person in response to the position in the three-dimensional space of the human detected by the projection inverse transformation unit 112 being in the security area of three dimensions. In the example of Fig. 11, it is detected that the intruder has intruded beyond the security yellow belt.

By intrusion detection in an elevation, erroneous detection of intrusion of an animal or movement of planted plants due to wind is eliminated.

### <Verification according to time>

Fig. 12 is a diagram showing an example of intruder verification according to time and Fig. 12 left shows a normal state in time and Fig. 12 right shows an abnormal state in time.

As shown by symbol c of Fig. 12 right, evaluation of the detection of intruder obtained by the intruder detection in an elevation is repeated every one second by the accurate digital security system 1000. As shown in Fig. 12 right, the intruder walks on the security yellow belt. The accurate digital security system 1000 judges that an intruder has intruded unquestionably in response to the intruder being detected for intrusion continuously on the security yellow belt.

### <Art of determining intrusion in an elevation: mapping>

An art of determining intrusion in an elevation shall now be described.

As an art of determining intrusion in an elevation, planar placement information of a site boundary is mapped onto a camera image.

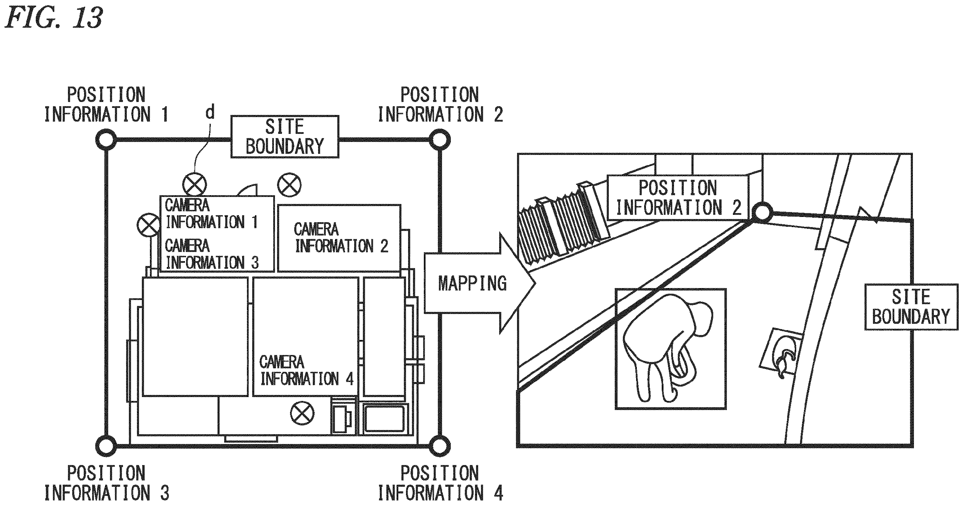

Fig. 13 is a diagram showing an example of mapping a site boundary onto a camera image and Fig. 13 left is a plan view of the site boundary and Fig. 13 right shows an example of mapping the site boundary onto the camera image. Mapping is an art of synthesizing an image generated by CG (computer graphics) with a photographic image. The CG can be naturally superimposed onto the photographic image by making a background portion of the CG transparent in the process of synthesis.

As shown in FIG. 13 left, in installing monitoring cameras (see × marks in Fig. 13 left), a plan view of a warning area (shape that serves as an outline such as a site boundary of one's home) is prepared accurately. Also, installation positions, heights, and orientations (roll, pitch, and yaw information) of the monitoring cameras are also provided. The aforementioned roll, pitch, and yaw represent rotational angles of a line of sight in three-dimensional space. If a line of sight direction is an X axis, a left hand direction perpendicular to it is a Y axis, and an upward direction of a viewpoint is a Z axis, rotation around the X axis is called roll, rotation around the Y axis is called pitch, and rotation around the Z axis is called yaw.

Fig. 13 right shows an example of mapping of an image of the monitoring camera of symbol d of Fig. 13 left.

Which part in the image obtained by the monitoring camera is determined within the site (see Fig. 13 right) by projection transformation and clipping viewport of position information of the warning area based on parameters of the camera. The aforementioned viewport represents limits in two dimensions when a three-dimensional space is recognized as two dimensions. This corresponds to the range captured in a photograph when the photograph is taken by the monitoring camera. The viewport represents the range that can be photographed by the monitoring camera. Also, the aforementioned clipping refers to a process of cutting out an object such as computer graphics expressed by three-dimensional data to a size of the viewport.

### <Art of determining intrusion in elevation: size comparison with objects registered in advance>

A height of a gate, a height of a car, a height of vegetation, and heights of a human (a size of the head, a height when standing upright, a height when squatting, and other sizes of a known human) within a site that is a mapped security area are compared.

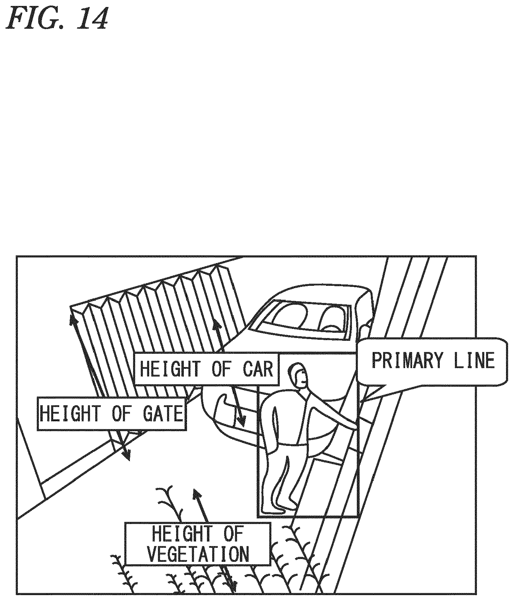

Fig. 14 is a diagram for describing an example of registering heights of objects that are present in advance within a site.

As shown in Fig. 14, a height of a gate, a height of a car, and a height of vegetation within the site that is a mapped security area are registered. Also, sizes that a human has and serve as references, that is, heights of the human (a size of the head, a height when standing upright, a height when squatting, and other sizes of a known human) are stored in advance in the projection storage unit 135. In a case where a human intrudes, an object having a human-like height, other than the pre-registered height of the gate, height of the car, and height of vegetation that are within the site that is the security area, is a human and an intruder (see frame in Fig. 14) is determined by a plurality of images of that shape.

Here, to determine intrusion in elevation, the projection inverse transformation unit 112 reads projected shapes that were defined and stored in advance as shapes projected in a three-dimensional space and human size information from the projection storage unit 135 in Step S31 and Step S32 of Fig. 9 described above. Then in Step S33, a three-dimensional position is detected by performing inverse transformation of projection transformation from an image of one monitoring camera 11 based on the two-dimensional image of the human detected in the security area and a size of the human.

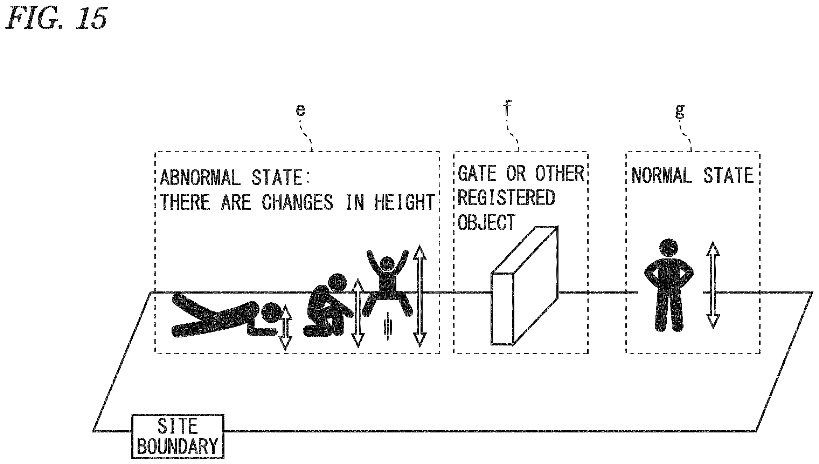

Fig. 15 is a diagram for describing changes in height according to states of a human. Symbol e of Fig. 15 indicates abnormal states in which there are changes in height. Symbol f of Fig. 15 indicates objects (gate, etc.) of various heights that are registered in the projection storage unit 135 (see Fig. 2), and symbol g of Fig. 15 indicates a size (height) of a human in a normal state that is registered in the projection storage unit 135 (see Fig. 2).

As shown in Fig. 15, accuracy of human-like positions and three-dimensional heights are incorporated (to correctly express proportions between thicknesses and heights of various parts of the whole body of a human, that is, the head, respective portions of the face, body, feet, etc., to judge a lying-down posture, a sitting posture, a half-sitting posture, a standing posture, etc.). Precision of caution degree judgment is thereby improved to nearly 100%.

A height of a human is determined from a height of a box of a region (primary line) (see the frame in Fig. 14) that surrounds a moving object in the image obtained from the monitoring camera.

### <Intrusion verification according to time>

An art of verifying intruder detection in an elevation more precisely by intrusion according to time shall now be described.

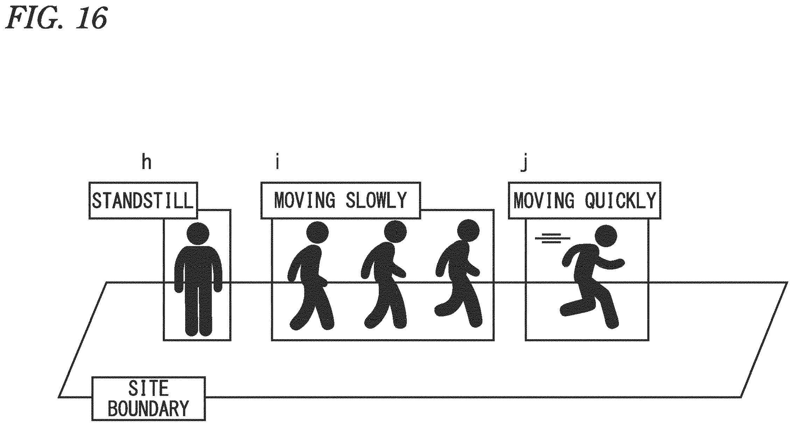

Fig. 16 is a diagram for describing changes in height according to states of a human. Symbol h of Fig. 16 indicates a state in which an intruder is at standstill, symbol i of Fig. 16 indicates a state in which the intruder is moving slowly, and symbol j of Fig. 16 indicates a state in which the intruder is moving quickly.

With the above-described intruder detection in an elevation, although it can be judged whether or not a human has intruded into a warning area (in a site boundary) at a certain instant, it cannot be determined whether or not the intrusion is performed with a certain purpose. That is, a case of accidentally intruding into the warning area (in the site boundary) cannot be eliminated. Therefore, with the accurate digital security system 1000, continuity in time is taken into consideration.

A case where, as shown in Fig. 16, information determining that a human has intruded into the site is obtained continuously for a short time. If this is detected continuously, for example, for 2 seconds, it can be judged that an intruder has intruded intentionally. By using this art of verifying intrusion according to time, a fact that "a human intruded into the site intentionally" can be judged and state information thereof can be registered.

### [Caution degree evaluation of a detected intruder]

The accurate digital security system 1000 evaluates a caution degree of a detected intruder and notifies a user according to the caution degree. This corresponds to the "reporting according to the danger degree (caution degree, urgency degree)" of Step S19 of the flow of Fig. 8B described above.

Specifically, an art of judging by a movement of the pupils and an art of judging by a movement of the neck are used. The accurate digital security system can thereby evaluate a psychological state of an object detected for intrusion into a warning area as a danger degree.

### <Judgment by movement of the pupils>

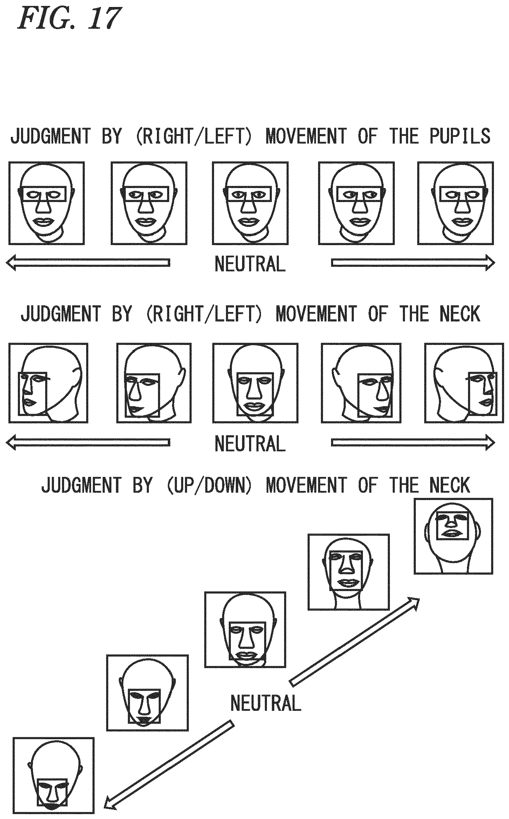

Fig. 17 top is a diagram for describing judgment by a (right/left) movement of the pupils.

For the face, by using an image processing art, positions of the eyes, the nose, and the mouth can be acquired by "face landmark detection." A location of the pupils is judged by the following art.

First, (1) an image of the eyes is cut out. This is called the primary line. (2) Next, this image is binarized. The pupils become black and the whites of the eyes become white. (3) The eyes are divided into three regions (right, center, and left) . The number of black pixels in each of these regions is counted. The region of the highest number is called the secondary line, and it is judged that the pupils are in this secondary line. That is, it can be judged whether the pupils are shifted to the right or are shifted to the left or are at the center.

### <Judgment by (right/left) movement of the neck>

Fig. 17 middle is a diagram for describing judgment by a (right/left) movement of the neck.

Movement of the neck - that is, when glancing right and left or looking upward, a human moves the neck. This movement of the neck is expressed in the form of orientation of the face. If a rectangle that contains points obtained by face landmark detection is deemed to be a primary line and a rectangle that contains the eyes, the nose, and the mouth is deemed to be a secondary line, the orientation of the face can be expressed numerically as a vector by an interval between barycentric coordinates of regions surrounded by the primary line and the secondary line.

By extracting contours of the eyes, eyebrows, nose, mouth, and jaw with respect to a position of the whole face shown in a rectangular frame in Fig. 17 middle, states of moving the neck such as to direct the face to the left and states of moving the neck such as to direct the face to the right from a neutral state at the center of Fig. 17 middle are determined in stepwise manner. Furthermore, by using this art, it is also possible to generate a face image of a neutral state from a face image photographed from a certain angle.

### <Judgment by (up/down) movement of the neck>

Fig. 17 bottom is a diagram for describing judgment by a (up/down) movement of the neck.

This (up/down) movement of the neck can also be judged in the same manner as the (right/left) movement of the neck.

### <Judgment according to elapse of time>

With the judgment by the position of the pupils shown in Fig. 17 top, just an instantaneous condition can be known. Therefore, status over a short time are tracked. For example, if position information on the eyes is acquired and recorded at 5 frame or 10 frames per second for 1 second and conditions judged as being right, center, and left are present mixedly, it can be judged that the eyes are moving vigorously. The accurate digital security system can thereby judge a state where "a human moved the eyes vigorously due to having an ill intention" and can register this state.

Also, similarly in regard to the position of the neck, movement can be judged by using a change in movement time of the neck. For example, if within a short time of 2 seconds, the vector changes from a right direction to a left direction or from an up direction to a down direction, it can be judged that the neck moved vigorously. The accurate digital security system can thereby judge a state where "a human moved the neck vigorously due to having an ill intention" and can register this state.

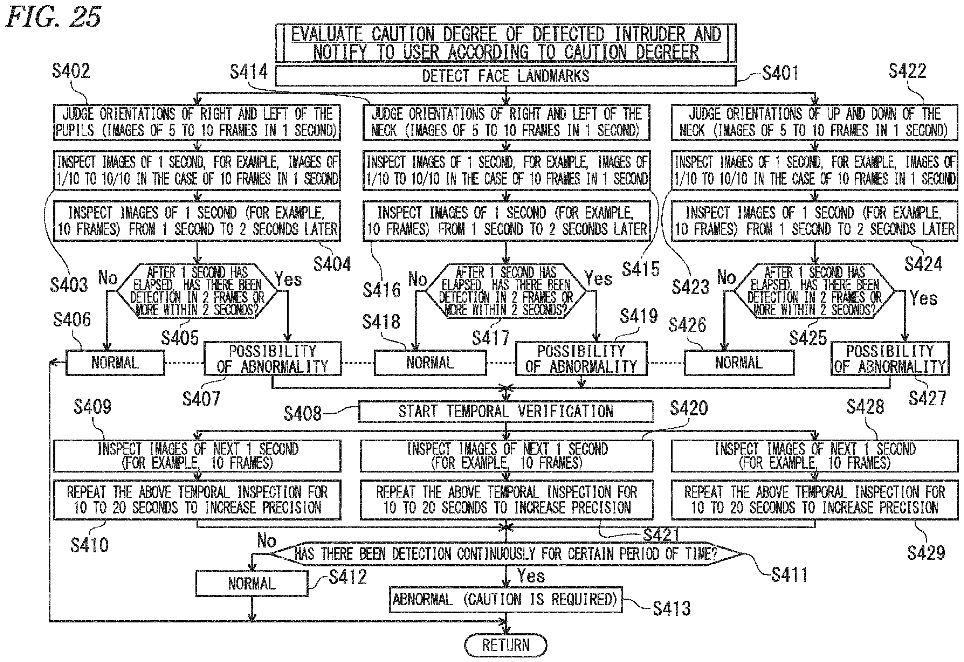

It is noted that the judgment process by changes in movements of the pupils and the neck of Fig. 17 shall be described later with Application Example 4 of Fig. 25.

### [Guard cancellation by BLE]

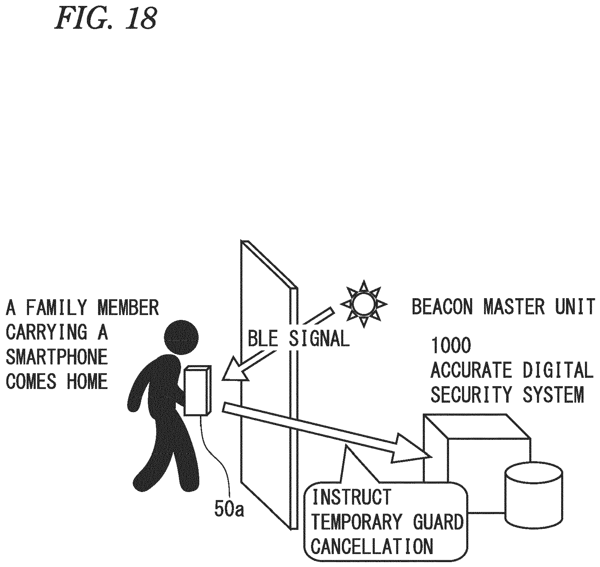

Fig. 18 is a diagram for describing temporary guard cancellation by BLE.

BLE (Bluetooth Low Energy) is an art for detecting proximity approach. The accurate digital security system has a function where, by a user installing a dedicated application for the accurate digital security system in a smartphone, the user and his/her family are allowed to intrude into a warning range. The user has a predetermined cancellation code (installed in the application) and when proximity is sensed, this cancellation code is sent by BLE to the accurate digital security system and a warning mode is cancelled temporarily (see Fig. 16). The user and his/her family can thereby be made exempt from detection concerning behavior within a site and intrusion detection of high precision can be performed.

### [Application examples]

Application examples of intrusion detection by the accurate digital security system shall now be described.

### <Application Example 1>

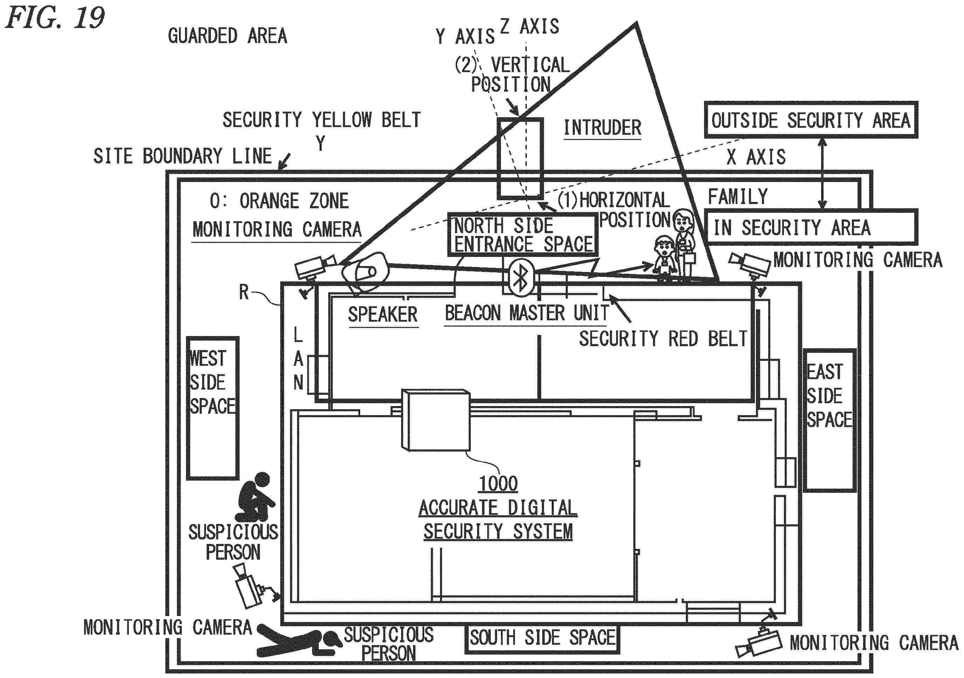

Fig. 19 is a diagram for describing Application Example 1 of intrusion detection by the accurate digital security system 1000.

As shown in Fig. 19, the security yellow belt is set at an inside a site boundary and a security red belt is set across a security zone, surrounding a wall of a house with an entrance door and a window. Although Fig. 19 is a plan view, to indicate detection of an intruder by an elevation, (1) a horizontal position (X axis, Y axis) and (2) a vertical position (Z axis) vertical to the horizontal position are expressed by broken lines in regard to the intruder. That is, for the intruder, the above-described "position in three-dimensional space by the projection inverse transformation unit 112" is detected. Intruder detection in the elevation is executed similarly for suspicious persons (a squatting suspicious person and a lying-down suspicious person) in the security zone at a west side space and a south side space in Fig. 19.

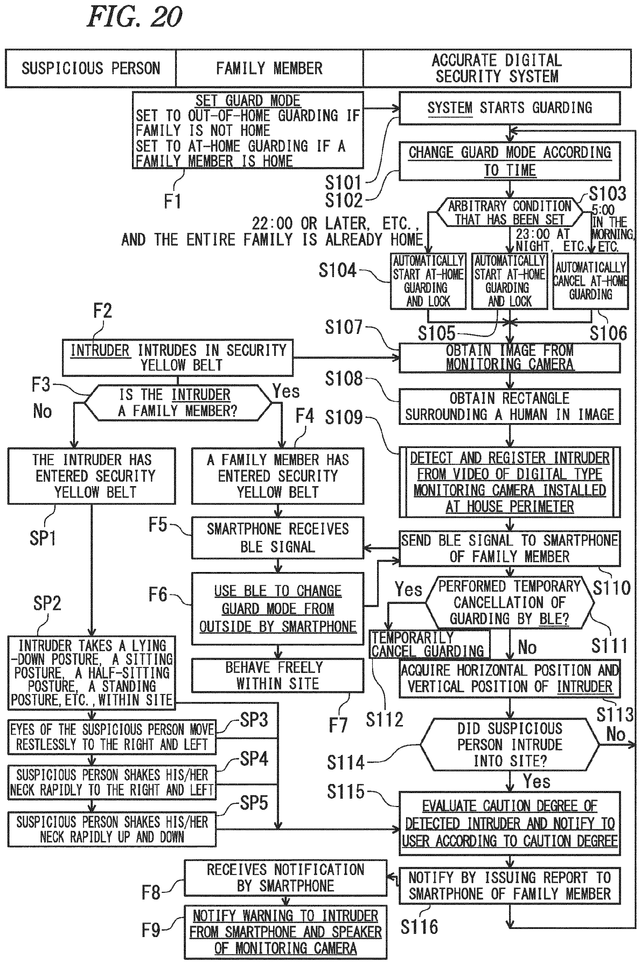

Fig. 20 is a flowchart showing an outline of an operation and actions of the accurate digital security system 1000, a family member, and a suspicious person in Application Example 1 of Fig. 19. Although the flows concerning the family member and the suspicious human in Fig. 20 are not CPU processes, these shall be described with step numbers attached for convenience. Step F is attached for the family member and Step SP is attached for the suspicious person.

### <<Accurate digital security system>>

The accurate digital security system 1000 starts guarding in Step S101 (Step S1).

In Step S102, the guard mode is changed according to time (Step S2) (corresponds to Step S2 of Fig. 5).

An arbitrary conditional determination that has been set is made (Step S103).
If 22:00 or later, etc., and the entire family is already home, at-home guarding is automatically started in Step S104.
If 23:00 at night, etc., at-home guarding is automatically started in Step S105.
If 5:00 in the morning, etc., at-home guarding is automatically cancelled in Step S106.

An image is obtained from a monitoring camera (Step S107) .

A rectangle surrounding a human in the image is obtained (Step S108) .

An intruder is detected and registered from a video of a monitoring camera installed at a house perimeter (Step S109) .

A BLE signal is sent to a smartphone of a family member (Step S110).

Whether or not temporary cancellation of guarding has been performed by BLE is determined (Step S111).

If temporary cancellation of guarding has been performed, guarding is cancelled temporarily (Step S112).

If temporary cancellation of guarding has not been performed, a horizontal position and a vertical position of an intruder are acquired in Step S113.

Whether or not intrusion into the site has been performed by a suspicious person is determined (Step S114).

If intrusion into the site has been performed by a suspicious person, a caution degree of the detected intruder is evaluated in Step S115 (corresponds to "danger degree determination" of Step S17 of Fig. 8) and information to be notified to a user is prepared according to the caution degree.

Notification is made by issuing a report to a smartphone of a family member in Step S116 (corresponds to "reporting" of Step S18 of Fig. 8) and it returns to the above Step S102.

### <<Family member>>

A family member or a relevant person sets the guard mode (step F1). If the family is not home, out-of-home guarding is set and if a family member is home, at-home guarding is set. The information on setting of the guard mode by a family member (step F1) is sent to the accurate digital security system 1000 and the accurate digital security system 1000 starts guarding (Step S1).

An intruder intrudes into the security yellow belt (step F2). For example, the intruder intrudes into security yellow belt at a north side shown in Fig. 19. The accurate digital security system 1000 obtains an image from a monitoring camera (Step S107).

Whether or not the intruder is a family member is determined (step F3).

If the intruder is a family member, the family member has entered the security yellow belt (step F4). For example, the family member has entered the security yellow belt at the north side shown in Fig. 19.

The accurate digital security system 1000 sends a BLE signal to a smartphone of the family member (Step S110), and the smartphone of the family member receives the BLE signal (step F5).

In response, the family member or relevant person uses the BLE to change the guard mode from outdoors by the smartphone (step F6). This is because the family member judged that there is need for guard reinforcement.

Behaves freely within the site (step F7).

A notification is received by the smartphone (step F8) .

A warning is notified to the intruder from the smartphone and a speaker of a monitoring camera (step F9).

### <<Intruder>>

If an intruder has intruded into the security yellow belt and the intruder is not a family member, a suspicious person has entered the security yellow belt (Step SP1).

Within the site, the suspicious person assumes a lying-down posture, a sitting posture, a half-sitting posture, a standing posture, etc. (Step SP2).

The eyes of the suspicious person move restlessly to the right and left (Step SP3).

The suspicious person shakes his/her neck rapidly to the right and left (Step SP4).

The suspicious person shakes his/her neck rapidly up and down (Step SP5) .

These movements of the suspicious person are sent to the accurate digital security system 1000 and the accurate digital security system 1000 determines the danger degree (caution degree, urgency degree) based on the movements of the suspicious person. The accurate digital security system 1000 can perform notification of a level according to the danger degree (caution degree, urgency degree) to a family member or relevant agency.

### <Application Example 2>

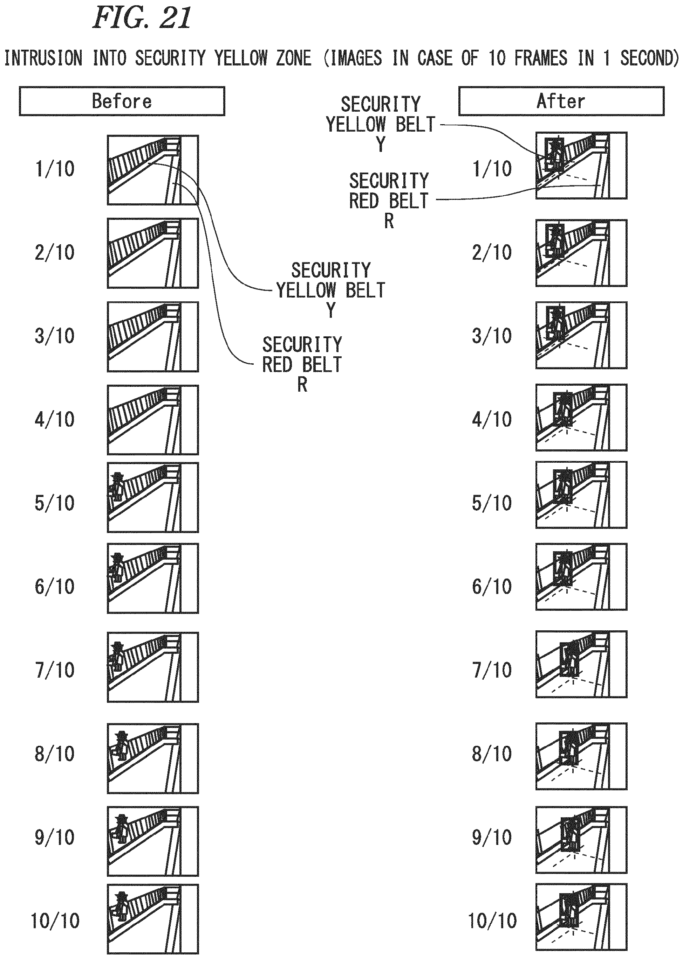

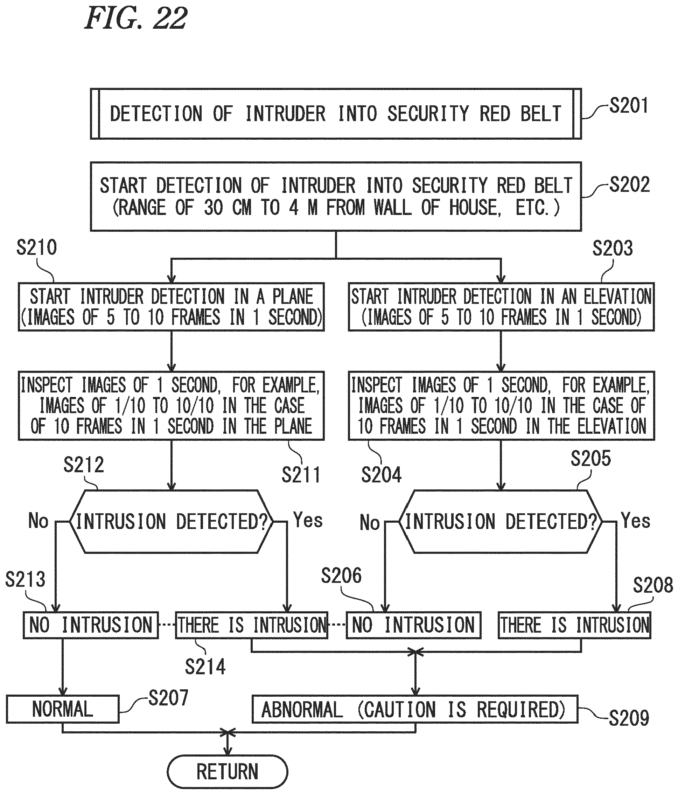

Fig. 21 is a diagram for describing Application Example 2 of intrusion detection by the accurate digital security system 1000. Fig. 21 shows an example of detecting and registering an intruder from a video of a monitoring camera installed at a house perimeter. Fig. 22 is a flowchart showing an operation of the accurate digital security system 1000 in Application Example 2 of Fig. 21.

Fig. 21 left are images of 10 frames in 1 second before intrusion by a suspicious person (Before). As shown in Fig. 21 left, a suspicious person has not intruded into a security yellow belt zone.

Fig. 21 right are images of 10 frames in 1 second after intrusion by a suspicious person (After). As shown in Fig. 21 right, the suspicious person has intruded into the security yellow belt zone. The human detection unit 111 of the control unit 110 (see Fig. 2) of the accurate digital security system 1000 detects the human (suspicious person) from the images photographed by the monitoring camera 11. The suspicious person detected in Fig. 21 right is indicated by a rectangular frame and approximate two-dimensional distances to a security red belt is indicated by broken lines. As shown in Fig. 21 right, the suspicious person who has intruded beyond the security yellow belt is approaching the security red belt.

In Fig. 22, an intruder into the security red belt is detected in Step S201. As mentioned above, the human detection unit 111 of the control unit 110 (see Fig. 2) of the accurate digital security system 1000 detects the human from the images photographed by the monitoring camera 11.

In Step S202, detection of an intruder into the security red belt (a range of, for example, 30 cm to 4 m from a wall, etc., of the house) is started.

Hereinafter, by branching into intruder detection in an elevation (Step S203 to Step S209) and intruder detection in a plane (Step S210 to Step S214), the intruder is detected in each of the elevation and the plane. With the present embodiment, the projection inverse transformation unit 112 (see Fig. 2) uses the projection storage unit 135 to detect, for a human detected by human detection, a position in a three-dimensional space based on a two-dimensional position of the human and a size of the human. Also, there is a characteristic in that, in response to the position in the three-dimensional space of the human detected by the projection inverse transformation unit 112 being in a security area of three dimensions, the control unit 110 (see Fig. 2) notifies presence of a suspicious person. The intrusion detection in the elevation is thus a main operation and Fig. 21 also shows images of the intruder in the elevation.

In Step S203, intruder detection in the elevation is started (images of 5 to 10 frames in 1 second).

In Step S204, images of 1 second, for example, in a case of 10 frames/second, images of 1/10 to 10/10 are inspected on the elevation.

In Step S205, whether or not intrusion has been detected is determined.

If intrusion is not detected in Step S205, it is determined that there is no intrusion in Step S206, a judgment of normal is made in Step S207, and the process of this flow is ended.

If intrusion is detected in Step S205, it is determined that there is intrusion in Step S208, judgment that there is abnormality (caution is required) is made in Step S209, and the process of this flow is ended.

Meanwhile, in Step S210, intrusion detection in the plane is started (images of 5 to 10 frames in 1 second).

In Step S211, images of 1 second, that is, in a case of 10 frames/second, images of 1/10 to 10/10 are inspected on the plane.

In Step S212, whether or not intrusion has been detected is determined.

If intrusion is not detected in Step S212, it is determined that there is no intrusion in Step S213, the judgment of normal is made in Step S207, and the process of this flow is ended.

If intrusion is detected in Step S212, it is determined that there is intrusion in S214, judgment that there is abnormality (caution is required) is made in Step S209, and the process of this flow is ended.

In Application Example 2, intrusion detection in an elevation and intrusion detection in a plane are used in combination and therefore, precision of detection can be increased than in intrusion detection in an elevation alone.

### <Application Example 3>

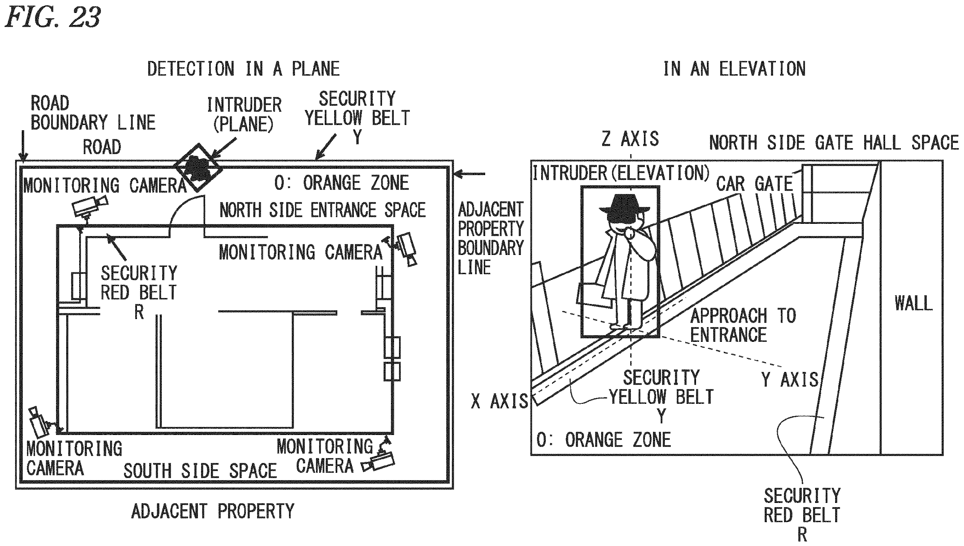

Fig. 23 is a diagram for describing Application Example 3 of intrusion detection by the accurate digital security system 1000. Fig. 23 left is a plan view that shows the intruder detection in a plane and Fig. 23 right is an elevation view that shows the intrusion detection in an elevation.

Fig. 23 right is an elevation view with which the plan view of Fig. 23 left is projection transformed by the above-described "art of determining intrusion in elevation (see Fig. 13 and Fig. 14)" to a three-dimensional space for detection of an intruder by an elevation. Fig. 23 right shows a situation where an intruder is entering from a car gate. In regard to the intruder, a horizontal position (X axis, Y axis) and a vertical position (Z axis) are expressed by broken lines.

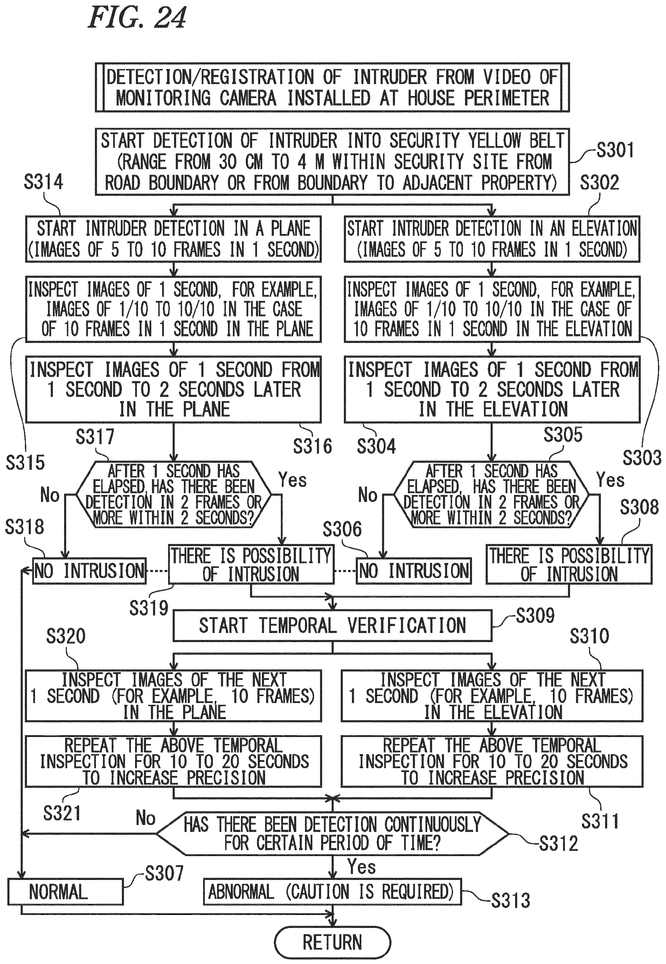

Fig. 24 is a flowchart showing an operation by the accurate digital security system 1000 of detecting and registering the intruder from a video of a monitoring camera installed at a house perimeter in Application Example 3 of Fig. 23.

In Step S301, detection of the intruder into a security yellow belt (a range within security-applied site, for example, from 30 cm to 4 m from a road boundary or from a boundary to adjacent property) is started.

Hereinafter, by branching into intruder detection in an elevation (Step S302 to Step S311) and intruder detection in a plane (Step S210 to Step S214), the intruder is detected in each of the elevation and the plane.

In Step S302, intruder detection in the elevation is started (images of 5 to 10 frames in 1 second).

In Step S303, images of 1 second (for example, in a case of 10 frames in 1 second, images of 1/10 to 10/10) are inspected on the elevation.

In Step S304, images (for example, images of 10 frames) of 1 second from 1 second to 2 seconds later are inspected on the elevation.

In Step S305, it is determined whether or not there has been detection in 2 or more frames within 2 seconds after 1 second has elapsed.

If there has not been detection in 2 or more frames within 2 seconds after 1 second has elapsed, it is judged that there is no intrusion in Step S306, a judgment of normal is made in Step S307, and the process of this flow is ended.

If in the above Step S305, there has been detection in 2 or more frames within 2 seconds after 1 second has elapsed, it is judged that there is a possibility of intrusion in Step S308, and temporal verification is started in Step S309. The temporal verification in the elevation is as follows.

That is, in Step S310, images (for example, of 10 frames) of the next 1 second are inspected on the elevation. Next, in Step S311, the temporal verification of the aforementioned Step S310 is repeated for 1 to 2 minutes to increase precision.

In Step S312, it is determined whether or not images indicating intruder detection have been detected continuously for a certain period of time.

If there has been continuous detection for the certain period of time, a determination that there is abnormality (caution is required) is made in Step S313 and the process of this flow is ended.

Meanwhile, in Step S314, intrusion detection in the plane is started (images of 5 to 10 frames in 1 second).

In Step S315, images of 1 second (for example, in a case of 10 frames in 1 second, images of 1/10 to 10/10) are inspected on the plane.

In Step S316, images (for example, images of 10 frames) of 1 second from 1 second to 2 seconds later are inspected on the plane.

In Step S317, it is determined whether or not there has been detection in 2 or more frames within 2 seconds after 1 second has elapsed.

If there has not been detection in 2 or more frames within 2 seconds after 1 second has elapsed, it is judged that there is no intrusion in Step S319, the judgment of normal is made in Step S307, and the process of this flow is ended.

If in the above Step S317, there has been detection in 2 or more frames within 2 seconds after 1 second has elapsed, it is judged that there is a possibility of intrusion in Step S319, and temporal verification is started in Step S309. The temporal verification in the plane is as follows.

That is, in Step S320, images (for example, of 10 frames) of the next 1 second are inspected on the plane. Next, in Step S321, the temporal verification of the aforementioned Step S320 is repeated for 1 to 2 minutes to increase precision.

In Step S312, it is determined whether or not images indicating intruder detection have been detected continuously for the certain period of time.

If there has been continuous detection for the certain period of time, the determination that there is abnormality (caution is required) is made in Step S313 and the process of this flow is ended.

In Application Example 3, intrusion detection in an elevation and intrusion detection in a plane are used in combination as in Application Example 2 and therefore, precision of detection can be increased than in intrusion detection in an elevation alone.

Also, in Application Example 3, temporal verification is performed when there is a possibility of intrusion and therefore, that there is intrusion by an intruder can be detected more reliably and precision of detection can be increased.

### <Application Example 4>

Fig. 25 is a flowchart showing a process of notifying to a user according to caution degree of the accurate digital security system 1000 in Application Example 4. The flow of Fig. 25 illustrates the judgment process according to changes in movements of the pupils and the neck of Fig. 17.

In Step S401, face landmarks are detected.

Hereinafter, by branching into intruder detection by movement of the pupils, intruder detection by movement of the neck to the right and left, and intruder detection by movement of the neck up and down, an intruder is detected.

### <<Movement of the pupils>>

In Step S402, locations of right and left of the pupils are judged based on images of 5 to 10 frames in 1 second.

In Step S403, images of 1 second, for example, in the case of 10 frames in 1 second, images of 1/10 to 10/10 are inspected.

In Step S404, images of 1 second (for example, 10 frames) from 1 second to 2 seconds later are inspected.

In Step S405, it is determined whether or not there has been detection in 2 or more frames within 2 seconds after 1 second has elapsed.

If there has not been detection in 2 or more frames within 2 seconds after 1 second has elapsed, a judgment of normal is made in Step S406, and the process of this flow is ended.

If in the above Step S405, there has been detection in 2 or more frames within 2 seconds after 1 second has elapsed, it is judged that there is a possibility of abnormality in Step S407 and Step S408 is proceeded.

In Step S408, temporal verification is started. The temporal verification according to movement of the pupils is as follows.

That is, in Step S409, images (for example, of 10 frames) of the next 1 second are inspected. Next, in Step S410, the temporal verification of the aforementioned Step S409 is repeated for 1 to 2 minutes to increase precision.

In Step S411, it is determined whether or not images indicating intruder detection have been detected continuously for a certain period of time.

If there has not been continuous detection for the certain period of time, a determination of normal is made in Step S412 and the process of this flow is ended. If there has been continuous detection for the certain period of time, a determination that there is abnormality (caution is required) is made in Step S413 and the process of this flow is ended.

### «Movement of the neck to the right and left»

In Step S414, locations of right and left of the neck are judged based on images of 5 to 10 frames in 1 second.

In Step S415, images of 1 second, for example, in the case of 10 frames in 1 second, images of 1/10 to 10/10 are inspected.

In Step S416, images of 1 second (for example, 10 frames) from 1 second to 2 seconds later are inspected.

In Step S417, it is determined whether or not there has been detection in 2 or more frames within 2 seconds after 1 second has elapsed.

If there has not been detection in 2 or more frames within 2 seconds after 1 second has elapsed, a judgment of normal is made in Step S418, and the process of this flow is ended.

If in the above Step S419, there has been detection in 2 or more frames within 2 seconds after 1 second has elapsed, it is judged that there is a possibility of abnormality in Step S419 and Step S408 is proceeded.

In Step S408, temporal verification is started. The temporal verification according to movement of the neck to the right and left is as follows.

That is, in Step S420, images (for example, of 10 frames) of the next 1 second are inspected. Next, in Step S421, the temporal verification of the aforementioned Step S409 is repeated for 1 to 2 minutes to increase precision.

In Step S411, it is determined whether or not images indicating intruder detection have been detected continuously for a certain period of time.

If there has not been continuous detection for the certain period of time, the determination of normal is made in Step S412 and the process of this flow is ended. If there has been continuous detection for the certain period of time, the determination that there is abnormality (caution is required) is made in Step S413 and the process of this flow is ended.

### <<Movement of the neck up and down>>

In Step S422, locations of up and down of the neck are judged based on images of 5 to 10 frames in 1 second.

In Step S423, images of 1 second, for example, in the case of 10 frames in 1 second, images of 1/10 to 10/10 are inspected.

In Step S424, images of 1 second (for example, 10 frames) from 1 second to 2 seconds later are inspected.

In Step S425, it is determined whether or not there has been detection in 2 or more frames within 2 seconds after 1 second has elapsed.

If there has not been detection in 2 or more frames within 2 seconds after 1 second has elapsed, a judgment of normal is made in Step S426, and the process of this flow is ended.

If in the above Step S425, there has been detection in 2 or more frames within 2 seconds after 1 second has elapsed, it is judged that there is a possibility of abnormality in Step S427 and Step S408 is proceeded.

In Step S408, temporal verification is started. The temporal verification according to movement of the neck up and down is as follows.

That is, in Step S428, images (for example, of 10 frames) of the next 1 second are inspected. Next, in Step S429, the temporal verification of the aforementioned Step S428 is repeated for 1 to 2 minutes to increase precision.

In Step S411, it is determined whether or not images indicating intruder detection have been detected continuously for a certain period of time.

If there has not been continuous detection for the certain period of time, the determination of normal is made in Step S412 and the process of this flow is ended. If there has been continuous detection for the certain period of time, the determination that there is abnormality (caution is required) is made in Step S413 and the process of this flow is ended.

By determining the movement of the pupils, the movement of the neck to the right and left, and the movement of the neck up and down according to the above-described flow, degree of accuracy in judging between a well-meaning human or an ill-intentioned intruder can be increased to enable the determination of the danger degree to be made more precisely.

As has been described in detail above, with the present embodiment, the accurate digital security system 1000 (see Fig. 1) comprises the monitoring camera 11 that photographs an image of a security area of three dimensions, the projection storage unit 135 that stores respective positions in two dimensions of the image photographed by the monitoring camera 11 in association with respective positions in a three-dimensional space photographed by the monitoring camera 11, the human detection unit 111 that detects a human from the image photographed by the monitoring camera 11, a projection inverse transformation unit 112 that detects a position in the three-dimensional space by the projection storage unit 135 based on a position in two dimensions of the human and a size of the human detected by the human detection unit, and the reporting unit 115 that reports presence of a suspicious person in response to the position in the three-dimensional space of the human detected by the projection inverse transformation unit 112 being in the security area of three dimensions.

With this configuration, it is possible to detect a three-dimensional position at low cost and establish a high level of security.

With the present embodiment, the size of the human is a size of a head of the human, which makes it possible to determine the three-dimensional position of the intruder based on information independent of individual differences that do not vary much with a human's age, gender, etc. as an indicator of the size of the human.

With the present embodiment, by determining the danger degree based on the position of the suspicious person, a state of warning can be ranked according to the danger degree. This allows an owner of a residence to take a corresponding action and eliminate the threat with higher precision by notifying an ordinary warning and a higher ranked warning with respect to the intruder into the security area.

With the present embodiment, the control unit 110 determines a danger degree based on a movement of the suspicious person, which make it possible to add the movement of the suspicious person to determination condition, determine the danger degree more precisely, and establish a high level of security. For example, by determining the danger degree based on the movement of the suspicious person, it is possible to distinguish whether it is a good person or a malicious intruder, further determine the danger degree in a case of an intruder, and rank a state of warning according to the danger degree.

With the present embodiment, the accurate digital security system 1000 comprises the ID terminal detection unit 113 that detects an ID terminal that a non-intruder possesses and the control unit 110 excludes a human possessing the ID terminal detected by the ID terminal detection unit 113 from suspicious persons. By excluding humans possessing ID terminals from suspicious persons, it is possible to reduce unnecessary reporting, and improve the effectiveness of surveillance. This also reduces the resources needed for monitoring and lowers the cost.

With the present embodiment, the accurate digital security system 1000 comprises the ID terminal registration unit 114 that registers an ID terminal that a non-intruder possesses and the control unit 110 excludes a human possessing the ID terminal detected by the ID terminal registration unit 114 from suspicious persons. By excluding humans registering ID terminals from suspicious persons, it is possible to reduce unnecessary reporting, and improve the effectiveness of surveillance. This also reduces the resources needed for monitoring and lowers the cost.

With the present embodiment, the accurate digital security system 1000 comprises the AI accelerator 200 that is a calculation resource other than the CPU and the human detection unit 111 of the control unit 110 uses the AI accelerator 200 to detect a human in the security area. The AI accelerator 200 can detect a human in real time in the broad security area by executing the human detection process on a dedicated hardware apart from CPU processes. It is also possible to detect a human in real time even with a configuration using an inexpensive camera device.

Also, by being the AI accelerator 200, it is possible to detect an intruder with extremely high precision compared to conventional image recognition by a moving object detection type monitoring camera using image difference.

The above descriptions are examples of preferred embodiments of the present invention, and the scope of the present invention is not limited thereto.

Also, although the title of an accurate digital security system and method is used for the embodiment described above, this is for convenience of description and the title may instead be a monitoring system, a security system, a search security method, etc.

Also, the accurate digital security system and method of the present invention are also realized by a program for making a computer function as the present accurate digital security system or method. This program may be stored in a storage medium that can be read by a computer.

The storage medium recorded with this program may be a ROM itself of the present accurate digital security system or may also be a CD-ROM, etc., that can be read by providing a CD-ROM drive or other program reading device as an external storage device and inserting the storage medium therein.

Also, a portion or all of the respective configurations, functions, processing units, processing means, etc., mentioned above may be realized by hardware by being designed, for example, in an integrated circuit, etc. Also, the respective configurations, functions, etc., mentioned above may be realized by a software for making a processor interpret and execute a program that realizes the respective functions. Information such as a program, table, file, etc., that realizes the respective functions can be stored in a recording device such as a memory, a hard disk, an SSD (solid state drive), etc., or a recording medium such as an IC (integrated circuit) card, an SD (Secure Digital) card, optical disk, etc.

All publications, patents, and patent applications cited in the present specification are hereby incorporated as reference in their entirety.

### [Industrial Applicability]

The accurate digital security system, method, and program according to the present invention are expected to be installed in residences, offices of enterprises, factories, research laboratories, information processing rooms, monetary accounting rooms, and other places of business, etc., requiring high-level control. Further, indoors and outdoors of buildings houses, commercial facilities, offices, hospitals, hotels, financial institutions, factories, research laboratories, power plants, air terminals, meeting venues, stadiums, museums, etc., and interiors of trains, ferries, and airplanes as transportation systems, etc., are also applicable.

### [Reference Signs List]

- 11: Monitoring camera (photographing means)
- 20: Human sensor
- 30: Wi-Fi master unit
- 40: Beacon master unit
- 50: Mobile terminal device (ID terminal)
- 50a: Smartphone (mobile terminal device; ID terminal)
- 51: Wi-Fi slave unit
- 52: Beacon slave unit
- 53: GPS
- 100: Monitoring equipment
- 110: Control unit
- 111: human detection unit (human detection means)
- 112: Projection inverse transformation unit (projection inverse transformation means)
- 113: ID terminal detection unit (ID terminal detection means)
- 114: ID terminal registration unit (ID terminal registration means)
- 115: Reporting unit (reporting means)
- 120: Input unit
- 130: Storage unit
- 135: Projection storage unit (projection storage means)
- 140: Display unit
- 150: Output unit
- 160: Video recording unit (recording means)
- 165: Face information DB
- 170: Image processing unit
- 180: Interface (I/F) unit
- 190: Communication unit
- 200: AI accelerator (human detection means)
- 1000: Accurate digital security system

## Claims

1. An accurate digital security system comprising:
a photographing means configured to photograph an image of a security area of three-dimensions;
a projection storage means configured to store respective positions in two dimensions of the image photographed by the photographing means in association with respective positions in a three-dimensional space photographed by the photographing means;
a human detection means configured to detect a human from the image photographed by the photographing means;
a projection inverse transformation means configured to detect a position in the three-dimensional space by the projection storage unit based on a position in two dimensions of the human and a size of the human detected by the human detection; and
a reporting means configured to report presence of a suspicious person in response to the position in the three-dimensional space of the human detected by the projection inverse transformation means being in the security area of three dimensions.

2. The accurate digital security system according to Claim 1, wherein the reporting means determines the presence of the suspicious person based on a time history of the position in the three-dimensional space of the detected human and reports the presence.

3. The accurate digital security system according to Claim 1, wherein the size of the human is a size of a head of the human.

4. The accurate digital security system according to Claim 1, wherein the reporting means reports a danger degree based on the position of the suspicious person.

5. The accurate digital security system according to Claim 1, wherein the reporting means reports a danger degree based on a movement of the suspicious person.

6. The accurate digital security system according to Claim 1, comprising:
an ID (identification) terminal detection means configured to detect an ID terminal that a non-intruder possesses; and
wherein the reporting means does not report a human possessing the ID terminal detected by the ID terminal detection means.

7. The accurate digital security system according to Claim 1, comprising:
an ID (identification) terminal registration means configured to register an ID terminal that a non-intruder possesses; and
wherein the reporting means does not report a human possessing the ID terminal registered by the ID terminal registration means.

8. An accurate digital security method comprising:
a photographing step of photographing an image of a security area of three dimensions;
a projection storage step of storing respective positions in two dimensions of the image photographed by the photographing step in association with respective positions in a three-dimensional space photographed by the photographing step;
a human detection step of detecting a human from the image photographed by the photographing step;
a projection inverse transformation step of detecting a position in the three-dimensional space by the projection storage step based on a position in two dimensions of the human and a size of the human detected by the human detection; and
a reporting step of reporting presence of a suspicious person in response to the position in the three-dimensional space of the human detected by the projection inverse transformation step being in the security area of three dimensions.

9. A program to make a computer function as:
an accurate digital security system comprising a photographing means configured to photograph an image of a security area of three-dimensions; a projection storage means configured to store respective positions in two dimensions of the image photographed by the photographing means in association with respective positions in a three-dimensional space photographed by the photographing means; a human detection means configured to detect a human from the image photographed by the photographing means; a projection inverse transformation means configured to detect a position in the three-dimensional space by the projection storage unit based on a position in two dimensions of the human and a size of the human detected by the human detection; and a reporting means configured to report presence of a suspicious person in response to the position in the three-dimensional space of the human detected by the projection inverse transformation means being in the security area of three dimensions.
